# EUROPEAN PATENT APPLICATION

(11) **EP 4 060 000 A1**
(43) Date of publication of application: **21.09.2022**
(21) Application number: 20886880.2
(22) Date of filing: 26.10.2020
(51) Int. Cl.: C08L 83/04, C08L 83/05, C08L 83/06, C08L 83/07, C08K 3/22

(54) **THERMALLY CONDUCTIVE ADDITION CURING SILICONE COMPOSITION AND METHOD FOR PRODUCING SAME**

(30) Priority: 15.11.2019 JP 2019207067; 06.04.2020 JP 2020068492
(71) Applicant: Shin-Etsu Chemical Co., Ltd., Tokyo 100-0005 (JP)
(72) Inventor: IWATA Mitsuhiro, Annaka-shi, Gunma 379-0224 (JP); TABATA Yuji, Annaka-shi, Gunma 379-0224 (JP); TAKAHASHI Toko, Annaka-shi, Gunma 379-0224 (JP); ISHIDA Rio, Annaka-shi, Gunma 379-0224 (JP)
(74) Representative: Mewburn Ellis LLP
(86) International application number: PCT/JP2020/040097
(87) International publication number: WO 2021/095501

(57) **Abstract**

This thermally conductive addition curing silicone composition contains: a heated mixture of an organopolysiloxane having at least two alkenyl groups bonded to silicon atoms in one molecule, an organohydrogen polysiloxane having at least three hydrogen atoms bonded to silicon atoms in one molecule, and aluminum oxide particles having an Na⁺ ion level of 50 ppm or less when an aluminum oxide powder is heat extracted by pure water for 24 hours at 60°C and the resultant water layer is measured by ion chromatography, the aluminum oxide particles having been surface-treated by the organohydrogen polysiloxane; an organohydrogen polysiloxane having two or more hydrogen atoms bonded to silicon atoms in one molecule; and a platinum group metal catalyst. Said composition can be applied to the inside of a module including electrical/electronic components and a circuit board on which these compounded are mounted, and can exhibit exceptional post-curing stress relaxation properties and thermal conductivity.

## Description

### TECHNICAL FIELD

This invention relates to an addition curable silicone composition having satisfactory thermal conduction and a method for preparing the same and more particularly, to a heat conductive, addition curable silicone composition which cures into a heat conductive silicone product having such stress relaxation and insulation properties that the cured product may be incorporated in electronic equipment and used as a heat-dissipating member for heat-generating electronic parts such as power devices, transistors, thyristors, and central processing units (CPU) without damaging the electronic parts.

### BACKGROUND ART

As a result of the recent trend of electronic part circuits toward higher integration density and higher voltage, integrated circuits generate an increased quantity of heat. Heat conductive silicone compositions are used for the purpose of relaxation of thermal stresses.

It is known that the use of fillers having good thermal conduction is effective for the purpose of relaxation of thermal stresses. Known fillers include silica powder, aluminum oxide powder, silicon carbide powder, silicon nitride powder, aluminum nitride powder, magnesium oxide powder, diamond powder, metal powder such as iron, stainless steel or copper, and carbon powder.

These fillers, however, have some problems. Since metal powder and carbon powder are electrically conductive, they cannot be used in heat conductive silicone compositions intended for electrical insulation. Since silicon carbide powder and diamond powder are high hardness materials, there is a risk that wirings and chips in boards filled with such powder can be abraded and broken. Although silicon nitride powder, aluminum nitride powder and magnesium oxide powder can be used from the aspect of electrical insulation, they are hydrolytic, lack long-term stability, and are difficult to ensure that heat conductive addition curable silicone compositions of two-pack type have storage stability.

From the above aspects, silica powder and aluminum oxide powder are regarded as the practically acceptable filler. Since silica powder is insufficiently heat conductive, an attempt to impart a high thermal conductivity encounters a substantial lowering in the workability, typically viscosity of silicone compositions. On use of aluminum oxide powder, it is known that aluminum oxide undergoes dehydrogenation reaction under the influence of Al-OH groups remaining on alumina surface through reaction with silicon-bonded hydrogen atoms. For low hardness materials set to a low crosslinking density, the influence of dehydrogenation reaction is not negligible. The countermeasures proposed thus far include use of aluminum oxide treated with silyl ketene acetal (see Patent Document 1: JP 2741436) and a silicone gel composition filled with aluminum oxide having a specific pH value (see Patent Document 2: JP 3676544).

However, the aluminum oxide whose surface is treated with silyl ketene acetal has the risk of a hardness change with heat aging and is difficult to use in the environment mainly intended for stress relaxation. The aluminum oxide having a specific pH value is obtained using a treating agent in the form of a mineral acid. Since dehydrogenation reaction occurs with the lapse of time due to the residual mineral acid, it is difficult to restrain a hardness change with time.

Then, Patent Document 3: JP 5821160 proposes a heat conductive silicone gel composition which has improved flow and long-term storage stability and cures into a product having excellent stress relaxation properties and experiencing a minimal hardness change with time. Values of thermal conductivity and a heat conductive, addition curable silicone composition of two-pack type are described nowhere. Because of an excessive content of Na⁺ ions after boiling extraction of the specified aluminum oxide, this composition is insufficient when the thermal conductivity is 2.0 W/m·k or higher.

### PRIOR ART DOCUMENTS

### PATENT DOCUMENTS

Patent Document 1: JP 2741436
Patent Document 2: JP 3676544
Patent Document 3: JP 5821160

### SUMMARY OF INVENTION

### TECHNICAL PROBLEM

An object of the invention, which has been made under the above-mentioned circumstances, is to provide a heat conductive, addition curable silicone composition which can be applied to electric/electronic parts and modules including circuit boards having electric/electronic parts mounted thereon, and cures into a product exhibiting excellent stress relaxation and heat conduction properties, and a method for preparing the same.

### SOLUTION TO PROBLEM

Making extensive investigations to attain the above object, the inventors have found that on use of a heat conductive, addition curable silicone composition comprising a mixture obtained by mixing and heating an organopolysiloxane having at least two silicon-bonded alkenyl groups per molecule, an organohydrogenpolysiloxane having at least three silicon-bonded hydrogen atoms per molecule, and aluminum oxide particles having a Na⁺ ion content of up to 50 ppm as measured by heat extracting aluminum oxide powder with pure water at 60°C for 24 hours and analyzing the water layer by ion chromatography, so that the aluminum oxide particles are surface-treated with the organohydrogenpolysiloxane, an organohydrogenpolysiloxane having two or more silicon-bonded hydrogen atoms per molecule, and a platinum group metal catalyst; preferably a heat conductive, addition curable silicone composition obtained by simultaneously mixing and heat treating at a temperature of at least 70°C a heat conductive filler in the form of aluminum oxide having a Na⁺ ion content of up to 50 ppm as measured by heat extracting aluminum oxide powder with pure water at 60°C for 24 hours and analyzing the water layer by ion chromatography, an alkenyl-containing organopolysiloxane, and an organohydrogenpolysiloxane, and adding an organohydrogenpolysiloxane and a curing catalyst to the heat-treated mixture, or a heat conductive, addition curable silicone composition of two-pack type consisting of a first pack obtained by mixing and heat treating at a temperature of at least 70°C a heat conductive filler in the form of aluminum oxide having a Na⁺ ion content of up to 50 ppm as measured by heat extracting aluminum oxide powder with pure water at 60°C for 24 hours and analyzing the water layer by ion chromatography, and an alkenyl-containing organopolysiloxane, and adding a curing catalyst to the heat-treated mixture, and a second pack obtained by simultaneously mixing and heat treating at a temperature of at least 70°C a heat conductive filler in the form of aluminum oxide having a Na⁺ ion content of up to 50 ppm as measured by heat extracting aluminum oxide powder with pure water at 60°C for 24 hours and analyzing the water layer by ion chromatography, an alkenyl-containing organopolysiloxane, and an organohydrogenpolysiloxane of specific structure, and adding the organohydrogenpolysiloxane of specific structure to the heat-treated mixture, storage stability is improved and a hardness change with time is suppressed. The invention is predicated on this finding.

Accordingly, the invention provides a heat conductive, addition curable silicone composition and a method for preparing the same, as defined below.
[1] A heat conductive, addition curable silicone composition comprising
   a mixture obtained by mixing and heating an organopolysiloxane having at least two silicon-bonded alkenyl groups per molecule, an organohydrogenpolysiloxane having at least three silicon-bonded hydrogen atoms per molecule, and aluminum oxide particles having a Na⁺ ion content of up to 50 ppm as measured by heat extracting aluminum oxide powder with pure water at 60°C for 24 hours and analyzing the water layer by ion chromatography, so that the aluminum oxide particles are surface-treated with the organohydrogenpolysiloxane,
   an organohydrogenpolysiloxane having two or more silicon-bonded hydrogen atoms per molecule, and
   a platinum group metal catalyst.
[2] The heat conductive, addition curable silicone composition of [1], comprising
   a heat-treated mixture obtained by mixing and heating at a temperature of at least 70°C,
   (A) 100 parts by weight of an organopolysiloxane having at least two silicon-bonded alkenyl groups per molecule, represented by the average compositional formula (1):

      RₐR¹_{b}SiO_{(4-a-b)/2} (1)

      wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4,
   (B) an organohydrogenpolysiloxane having at least three silicon-bonded hydrogen atoms per molecule, represented by the average compositional formula (2):

      R²_{c}H_{d}SiO_{(4-c-d)/2} (2)

      wherein R² is independently an unsubstituted or substituted monovalent hydrocarbon group free of aliphatic unsaturation, c is a positive number of 0.7 to 2.2, d is a positive number of 0.001 to 0.5, and c+d is a positive number of 0.8 to 2.5, in such an amount as to provide 0.1 to 2 silicon-bonded hydrogen atoms (i.e., SiH groups) in component (B) per alkenyl group in component (A), and
   (C) 1,000 to 7,000 parts by weight of aluminum oxide particles having a Na⁺ ion content of up to 50 ppm as measured by heat extracting aluminum oxide powder with pure water at 60°C for 24 hours and analyzing the water layer by ion chromatography,
   (D) an organohydrogenpolysiloxane having at least two silicon-bonded hydrogen atoms per molecule, represented by the average compositional formula (3):

      R³ₑH_{f}SiO_{(4-e-f)/2} (3)

      wherein R³ is independently an unsubstituted or substituted monovalent hydrocarbon group free of aliphatic unsaturation, e is a positive number of 0.7 to 2.2, f is a positive number of 0.001 to 0.5, and e+f is a positive number of 0.8 to 2.5, in such an amount as to provide 0.01 to 3 silicon-bonded hydrogen atoms (i.e., SiH groups) in component (D) per alkenyl group in component (A), and
   (E) a platinum group metal catalyst in such an amount as to provide 1 to 200 ppm by weight of platinum group metal based on component (A), wherein
      the composition has a thermal conductivity of 2.0 to 7.0 W/m·k as measured by the hot disk method according to ISO 22007-2, and a viscosity at 25°C of 30 to 800 Pa·s as measured by a spiral viscometer under conditions: rotor A, speed 10 rpm, and shear rate 6 sec⁻¹.
[3] The heat conductive, addition curable silicone composition of [2] wherein the total number of SiH groups in components (B) and (D) is 0.11 to 5 per alkenyl group in component (A).
[4] The heat conductive, addition curable silicone composition of [2] or [3] wherein the heat-treated mixture is obtained by mixing and heating at a temperature of at least 70°C components (A) to (C) with (F) a silane coupling agent and/or (G) an organopolysiloxane represented by the general formula (5): 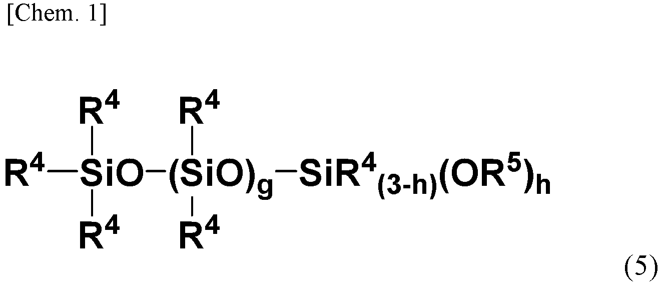 wherein R⁴ is independently an unsubstituted or substituted monovalent hydrocarbon group, R⁵ is independently an alkyl, alkoxyalkyl, alkenyl or acyl group, g is an integer of 5 to 100, and h is an integer of 1 to 3, and having a viscosity at 25°C of 0.01 to 30 Pa·s.
[5] A method of preparing a heat conductive, addition curable silicone composition, comprising the steps of:
   heat treating at a temperature of at least 70°C,
   (A) 100 parts by weight of an organopolysiloxane having at least two silicon-bonded alkenyl groups per molecule, represented by the average compositional formula (1):

      RₐR¹_{b}SiO_{(4-a-b)/2} (1)

      wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4,
   (B) an organohydrogenpolysiloxane having at least three silicon-bonded hydrogen atoms per molecule, represented by the average compositional formula (2):

      R²_{c}H_{d}SiO_{(4-c-d)/2} (2)

      wherein R² is independently an unsubstituted or substituted monovalent hydrocarbon group free of aliphatic unsaturation, c is a positive number of 0.7 to 2.2, d is a positive number of 0.001 to 0.5, and c+d is a positive number of 0.8 to 2.5, in such an amount as to provide 0.1 to 2 silicon-bonded hydrogen atoms (i.e., SiH groups) in component (B) per alkenyl group in component (A), and
   (C) 1,000 to 7,000 parts by weight of aluminum oxide particles having a Na⁺ ion content of up to 50 ppm as measured by heat extracting aluminum oxide powder with pure water at 60°C for 24 hours and analyzing the water layer by ion chromatography,
      cooling the heat-treated mixture,
      adding to and mixing with the mixture
   (D) an organohydrogenpolysiloxane having at least two silicon-bonded hydrogen atoms per molecule, represented by the average compositional formula (3):

      R³ₑH_{f}SiO_{(4-e-f)/2} (3)

      wherein R³ is independently an unsubstituted or substituted monovalent hydrocarbon group free of aliphatic unsaturation, e is a positive number of 0.7 to 2.2, f is a positive number of 0.001 to 0.5, and e+f is a positive number of 0.8 to 2.5, in such an amount as to provide 0.01 to 3 silicon-bonded hydrogen atoms (i.e., SiH groups) in component (D) per alkenyl group in component (A), and
   (E) a platinum group metal catalyst in such an amount as to provide 1 to 200 ppm by weight of platinum group metal based on component (A), wherein
      the resulting composition has a thermal conductivity of 2.0 to 7.0 W/m·k as measured by the hot disk method according to ISO 22007-2, and a viscosity at 25°C of 30 to 800 Pa·s as measured by a spiral viscometer under conditions: rotor A, speed 10 rpm, and shear rate 6 sec⁻¹.
[6] The method of [5] wherein the total number of SiH groups in components (B) and (D) is 0.11 to 5 per alkenyl group in component (A).
[7] The method of [5] or [6], wherein the heat treatment is performed by further mixing components (A) to (C) with (F) a silane coupling agent and/or (G) an organopolysiloxane represented by the general formula (5): 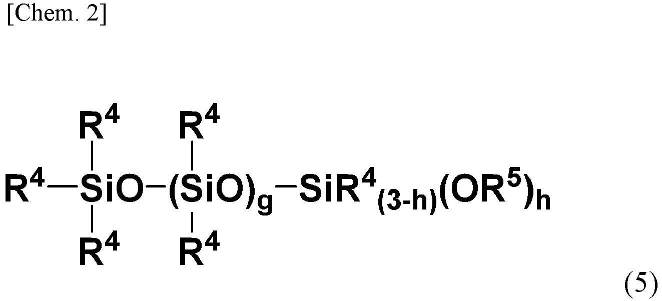 wherein R⁴ is independently an unsubstituted or substituted monovalent hydrocarbon group, R⁵ is independently an alkyl, alkoxyalkyl, alkenyl or acyl group, g is an integer of 5 to 100, and h is an integer of 1 to 3, and having a viscosity at 25°C of 0.01 to 30 Pa·s.
[8] The heat conductive, addition curable silicone composition of [1], which is of two pack type, i.e., consists of
   a first pack containing
      a heat-treated mixture obtained by heat treating at a temperature of at least 70°C (A) an organopolysiloxane having at least two silicon-bonded alkenyl groups per molecule, represented by the average compositional formula (1):

         RₐR¹_{b}SiO_{(4-a-b)/2} (1)
      wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4, and (C) aluminum oxide having a Na⁺ ion content of up to 50 ppm as measured by heat extracting aluminum oxide powder with pure water at 60°C for 24 hours and analyzing the water layer by ion chromatography, and
      (E) a platinum group metal catalyst in such an amount as to provide 1 to 200 ppm of platinum group metal based on the total weight of component (A), and
   a second pack containing
      a heat-treated mixture obtained by heat treating at a temperature of at least 70°C (A) an organopolysiloxane having at least two silicon-bonded alkenyl groups per molecule, represented by the average compositional formula (1):

         RₐR¹_{b}SiO_{(4-a-b)/2} (1)
      wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4, (B) an organohydrogenpolysiloxane having at least three silicon-bonded hydrogen atoms per molecule, represented by the average compositional formula (2):

         R²_{c}H_{d}SiO_{(4-c-d)/2} (2)
      wherein R² is independently an unsubstituted or substituted monovalent hydrocarbon group free of aliphatic unsaturation, c is a positive number of 0.7 to 2.2, d is a positive number of 0.001 to 0.5, and c+d is a positive number of 0.8 to 2.5, in such an amount as to provide 0.1 to 2 silicon-bonded hydrogen atoms (i.e., SiH groups) in component (B) per alkenyl group in the total of component (A), and (C) aluminum oxide having a Na⁺ ion content of up to 50 ppm as measured by heat extracting aluminum oxide powder with pure water at 60°C for 24 hours and analyzing the water layer by ion chromatography, and (H) an organohydrogenpolysiloxane having two silicon-bonded hydrogen atoms per molecule, represented by the average compositional formula (4):

         R⁷ⱼHₖSiO_{(4-j-k)/2} (4)
      wherein R⁷ is independently an unsubstituted or substituted monovalent hydrocarbon group free of aliphatic unsaturation, j is a positive number of 0.7 to 2.2, k is a positive number of 0.001 to 0.5, and j+k is a positive number of 0.8 to 2.5, in such an amount as to provide 0.01 to 3 silicon-bonded hydrogen atoms (i.e., SiH groups) in component (H) per alkenyl group in the total of component (A),
      wherein the first pack is free of components (B) and (H), the second pack is free of component (E), the total amount of component (A) in the composition is 100 parts by weight, the total amount of component (C) is 1,000 to 7,000 parts by weight, each of the first and second packs has a thermal conductivity of 2.0 to 7.0 W/m·k as measured by the hot disk method according to ISO 22007-2, and a viscosity at 25°C of 30 to 800 Pa·s as measured by a spiral viscometer under conditions: rotor A, speed 10 rpm, and shear rate 6 sec⁻¹.
[9] The heat conductive, addition curable silicone composition of [8] wherein the total number of SiH groups in components (B) and (H) is 0.11 to 5 per alkenyl group in the total of component (A).
[10] The heat conductive, addition curable silicone composition of [8] or [9], further comprising (F) a silane coupling agent and/or (G) an organopolysiloxane represented by the general formula (5): 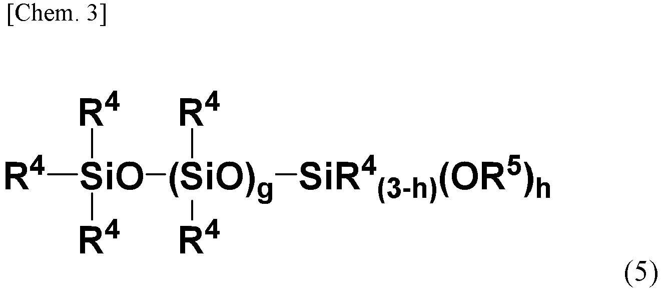
   wherein R⁴ is independently an unsubstituted or substituted monovalent hydrocarbon group, R⁵ is independently an alkyl, alkoxyalkyl, alkenyl or acyl group, g is an integer of 5 to 100, and h is an integer of 1 to 3, and having a viscosity at 25°C of 0.01 to 30 Pa·s,
   wherein the first pack contains component (F) and/or (G) as a heat-treated mixture of components (A) and (C) therewith after heat treatment at 70°C or higher, and the second pack contains component (F) and/or (G) as a heat-treated mixture of components (A), (B) and (C) therewith after heat treatment at 70°C or higher.
[11] A method of preparing a heat conductive, addition curable silicone composition, comprising the steps of:
   preparing a first pack by mixing (A) an organopolysiloxane having at least two silicon-bonded alkenyl groups per molecule, represented by the average compositional formula (1):

      RₐR¹_{b}SiO_{(4-a-b)/2} (1)

      wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4, with (C) aluminum oxide having a Na⁺ ion content of up to 50 ppm as measured by heat extracting aluminum oxide powder with pure water at 60°C for 24 hours and analyzing the water layer by ion chromatography, at a temperature of at least 70°C for heat treatment, cooling the heat-treated mixture, adding to and mixing with the heat-treated mixture (E) a platinum group metal catalyst in such an amount as to provide 1 to 200 ppm of platinum group metal based on the total weight of component (A), and
   preparing a second pack by mixing (A) an organopolysiloxane having at least two silicon-bonded alkenyl groups per molecule, represented by the average compositional formula (1):

      RₐR¹_{b}SiO_{(4-a-b)/2} (1)

      wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4, (B) an organohydrogenpolysiloxane having at least three silicon-bonded hydrogen atoms per molecule, represented by the average compositional formula (2):

         R²_{c}H_{d}SiO_{(4-c-d)/2} (2)
      wherein R² is independently an unsubstituted or substituted monovalent hydrocarbon group free of aliphatic unsaturation, c is a positive number of 0.7 to 2.2, d is a positive number of 0.001 to 0.5, and c+d is a positive number of 0.8 to 2.5, in such an amount as to provide 0.1 to 2 silicon-bonded hydrogen atoms (i.e., SiH groups) in component (B) per alkenyl group in component (A), and (C) aluminum oxide having a Na⁺ ion content of up to 50 ppm as measured by heat extracting aluminum oxide powder with pure water at 60°C for 24 hours and analyzing the water layer by ion chromatography, at a temperature of at least 70°C for heat treatment, cooling the heat-treated mixture, adding to and mixing with the heat-treated mixture (H) an organohydrogenpolysiloxane having two silicon-bonded hydrogen atoms per molecule, represented by the average compositional formula (4):

         R⁷ⱼHₖSiO_{(4-j-k)/2} (4)
      wherein R⁷ is independently an unsubstituted or substituted monovalent hydrocarbon group free of aliphatic unsaturation, j is a positive number of 0.7 to 2.2, k is a positive number of 0.001 to 0.5, and j+k is a positive number of 0.8 to 2.5, in such an amount as to provide 0.01 to 3 silicon-bonded hydrogen atoms (i.e., SiH groups) in component (H) per alkenyl group in the total of component (A),
      wherein the first pack is free of components (B) and (H), the second pack is free of component (E), the total amount of component (A) in the composition is 100 parts by weight, the total amount of component (C) is 1,000 to 7,000 parts by weight, each of the first and second packs has a thermal conductivity of 2.0 to 7.0 W/m·k as measured by the hot disk method according to ISO 22007-2, and a viscosity at 25°C of 30 to 800 Pa·s as measured by a spiral viscometer under conditions: rotor A, speed 10 rpm, and shear rate 6 sec⁻¹.
[12] The method of [11] wherein the total number of SiH groups in components (B) and (H) is 0.11 to 5 per alkenyl group in the total of component (A).
[13] The method of [11] or [12], wherein component (F) is a silane coupling agent and component (G) is an organopolysiloxane represented by the general formula (5): 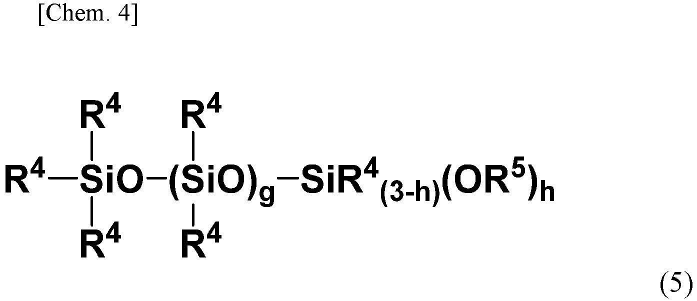 wherein R⁴ is independently an unsubstituted or substituted monovalent hydrocarbon group, R⁵ is independently an alkyl, alkoxyalkyl, alkenyl or acyl group, g is an integer of 5 to 100, and h is an integer of 1 to 3, and having a viscosity at 25°C of 0.01 to 30 Pa·s,
   the step of preparing the first pack includes mixing components (A) and (C) with component (F) and/or (G) and heat treating the mixture, and the step of preparing the second pack includes mixing components (A), (B) and (C) with component (F) and/or (G) and heat treating the mixture.

### ADVANTAGEOUS EFFECTS OF INVENTION

According to the invention, there is obtained a heat conductive, addition curable silicone composition having improved storage stability and a minimized hardness change with time. A cured product of the composition, that is, heat conductive silicone exhibits improved stress relaxation and heat conduction properties so that it may be advantageously used for the protection of electric/electronic parts and circuit boards having such parts mounted thereon.

### DESCRIPTION OF EMBODIMENTS

Now the invention is described in detail.

The invention provides a heat conductive, addition curable silicone composition comprising
a mixture obtained by mixing and heating an organopolysiloxane having at least two silicon-bonded alkenyl groups per molecule, an organohydrogenpolysiloxane having at least three silicon-bonded hydrogen atoms per molecule, and aluminum oxide particles having a Na⁺ ion content of up to 50 ppm as measured by heat extracting aluminum oxide powder with pure water at 60°C for 24 hours and analyzing the water layer by ion chromatography, so that the aluminum oxide particles are surface-treated with the organohydrogenpolysiloxane,
an organohydrogenpolysiloxane having two or more silicon-bonded hydrogen atoms per molecule, and
a platinum group metal catalyst.

### [First Embodiment]

A first embodiment of the invention is a heat conductive, addition curable silicone composition comprising
a heat-treated mixture obtained by mixing and heating at a temperature of at least 70°C,
(A) 100 parts by weight of an organopolysiloxane having at least two silicon-bonded alkenyl groups per molecule, represented by the average compositional formula (1):

   RₐR¹_{b}SiO_{(4-a-b)/2} (1)

   wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4,
(B) an organohydrogenpolysiloxane having at least three silicon-bonded hydrogen atoms per molecule, represented by the average compositional formula (2):

   R²_{c}H_{d}SiO_{(4-c-d)/2} (2)

   wherein R² is independently an unsubstituted or substituted monovalent hydrocarbon group free of aliphatic unsaturation, c is a positive number of 0.7 to 2.2, d is a positive number of 0.001 to 0.5, and c+d is a positive number of 0.8 to 2.5, in such an amount as to provide 0.1 to 2 silicon-bonded hydrogen atoms (i.e., SiH groups) in component (B) per alkenyl group in component (A), and
(C) 1,000 to 7,000 parts by weight of aluminum oxide particles having a Na⁺ ion content of up to 50 ppm as measured by heat extracting aluminum oxide powder with pure water at 60°C for 24 hours and analyzing the water layer by ion chromatography,
(D) an organohydrogenpolysiloxane having at least two silicon-bonded hydrogen atoms per molecule, represented by the average compositional formula (3):

   R³ₑH_{f}SiO_{(4-e-f)/2} (3)

   wherein R³ is independently an unsubstituted or substituted monovalent hydrocarbon group free of aliphatic unsaturation, e is a positive number of 0.7 to 2.2, f is a positive number of 0.001 to 0.5, and e+f is a positive number of 0.8 to 2.5, in such an amount as to provide 0.01 to 3 silicon-bonded hydrogen atoms (i.e., SiH groups) in component (D) per alkenyl group in component (A), and
(E) a platinum group metal catalyst in such an amount as to provide 1 to 200 ppm by weight of platinum group metal based on component (A), wherein
   the composition has a thermal conductivity of 2.0 to 7.0 W/m·k as measured by the hot disk method according to ISO 22007-2, and a viscosity at 25°C of 30 to 800 Pa·s as measured by a spiral viscometer under conditions: rotor A, speed 10 rpm, and shear rate 6 sec⁻¹.

Component (A) in the inventive composition is a main component or base polymer in the composition. Component (A) is an organopolysiloxane having at least two alkenyl groups bonded to silicon atoms (referred to as "silicon-bonded alkenyl groups," hereinafter) per molecule, represented by the average compositional formula (1). The number of silicon-bonded alkenyl groups per molecule is at least 2, preferably 2 to 50, more preferably 2 to 20. The silicon-bonded alkenyl groups may be attached to a silicon atom at the end of the molecular chain or a silicon atom at a non-end position of the molecular chain (i.e., other than the molecular chain end), or a combination thereof. R

ₐR¹_{b}SiO_{(4-a-b)/2} (1)

Herein R is independently an alkenyl group, R¹ is independently an unsubstituted or substituted monovalent hydrocarbon group free of aliphatic unsaturation, "a" is a positive number of 0.0001 to 0.2, "b" is a positive number of 1.7 to 2.2, and a+b is a positive number of 1.9 to 2.4.

In formula (1), R is independently an alkenyl group of typically 2 to 6 carbon atoms, preferably 2 to 4 carbon atoms. Examples thereof include lower alkenyl groups such as vinyl, allyl, propenyl, isopropenyl, butenyl, and isobutenyl, with vinyl being most preferred.

In formula (1), R¹ is independently an unsubstituted or substituted monovalent hydrocarbon group free of aliphatic unsaturation, having typically 1 to 10 carbon atoms, preferably 1 to 6 carbon atoms. Examples thereof include alkyl groups such as methyl, ethyl, propyl, isopropyl, butyl, isobutyl, tert-butyl, pentyl, hexyl, cyclohexyl, octyl and decyl; aryl groups such as phenyl and tolyl; aralkyl groups such as benzyl and phenylethyl; and substituted forms of the foregoing groups in which some or all of the hydrogen atoms are substituted by halogen atoms, e.g., fluorine, chlorine or bromine, such as chloromethyl and 3,3,3-trifluoropropyl. From the aspect of ease of synthesis, methyl, phenyl and 3,3,3-trifluoropropyl are preferred.

In formula (1), "a" is a positive number of 0.0001 to 0.2, preferably a positive number of 0.0005 to 0.1, "b" is a positive number of 1.7 to 2.2, preferably a positive number of 1.9 to 2.0, and a+b is a positive number of 1.9 to 2.4, preferably a positive number of 1.95 to 2.05.

The molecular structure of the organopolysiloxane as component (A) is not particularly limited and may be any of a linear structure, branched chain structure containing RSiO_{3/2} units, R¹SiO_{3/2} units, SiO₂ units, and other units in some parts of the molecular chain wherein groups R and R¹ are as defined above, cyclic structure, three-dimensional network (or resinous) structure, and mixture thereof. Especially preferred is a linear diorganopolysiloxane based on a backbone consisting essentially of repeating diorganosiloxane units and capped at both ends of the molecular chain with triorganosiloxy groups.

The organopolysiloxane as component (A) should preferably have a viscosity of 50 to 100,000 mPa·s, more preferably 100 to 10,000 mPa·s. As long as the viscosity is in the range of 50 to 100,000 mPa·s, the cured product has satisfactory strength, flow and workability. It is noted that the viscosity is as measured at 25°C by a rotational viscometer (the same holds true, hereinafter).

Exemplary of the organopolysiloxane as component (A) meeting the above requirements are those having the general formula (1A): 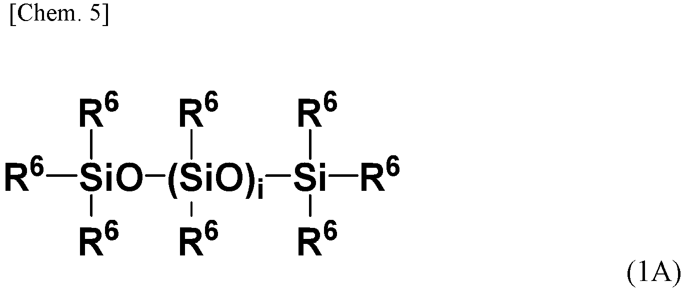 wherein R⁶ is independently an unsubstituted or substituted monovalent hydrocarbon group, at least two of R⁶ being alkenyl groups, and i is an integer of 20 to 2,000.

In formula (1A), the unsubstituted or substituted monovalent hydrocarbon groups represented by R⁶ are as defined above for R (alkenyl groups) and R¹ (unsubstituted or substituted monovalent hydrocarbon groups free of aliphatic unsaturation), and their carbon count and illustrative examples are also the same. Notably, at least two of groups R⁶ are alkenyl groups, preferably 2 to 50 groups, more preferably 2 to 20 groups being alkenyl groups. The subscript "i" is preferably an integer of 40 to 1,200, more preferably 50 to 600.

Examples of the organopolysiloxane having formula (1A) include molecular chain both end dimethylvinylsiloxy-capped dimethylpolysiloxane, molecular chain both end trimethylsiloxy-capped dimethylsiloxane/methylvinylsiloxane copolymers, molecular chain one end trimethylsiloxy-capped, one end dimethylvinylsiloxy-capped dimethylsiloxane/methylvinylsiloxane copolymers, molecular chain both end dimethylvinylsiloxy-capped dimethylsiloxane/methylvinylsiloxane copolymers, and molecular chain both end dimethylvinylsiloxy-capped dimethylsiloxane/diphenylsiloxane copolymers.

The organopolysiloxane as component (A) may be used alone or in admixture of two or more.

The alkenyl-containing organopolysiloxane is per se known and prepared by any prior art well-known methods.

Component (B) in the inventive composition is an organohydrogenpolysiloxane having at least three silicon-bonded hydrogen atoms per molecule, which serves as a surface treating agent for aluminum oxide as component (C) and crosslinker. That is, component (B) is essential for the inventive composition in the sense that during heat treatment at high temperature, component (B) is partially consumed by dehydrogenation reaction with Al-OH groups remaining on the surface of component (C) and residues of the surface treating agent in the form of mineral acid, and the remaining silicon-bonded hydrogen atoms undergo addition reaction with alkenyl groups in component (A).

Component (B) is an organohydrogenpolysiloxane having at least three hydrogen atoms bonded to silicon atoms (referred to as "silicon-bonded hydrogen atoms," hereinafter) per molecule, represented by the average compositional formula (2). The number of silicon-bonded hydrogen atoms per molecule in the organohydrogenpolysiloxane is preferably 3 to 100, more preferably 3 to 50, most preferably 3 to 20.

R²_{c}H_{d}SiO_{(4-c-d)/2} (2)

Herein R² is independently an unsubstituted or substituted monovalent hydrocarbon group free of aliphatic unsaturation, c is a positive number of 0.7 to 2.2, d is a positive number of 0.001 to 0.5, and c+d is a positive number of 0.8 to 2.5.

In formula (2), R² is independently an unsubstituted or substituted monovalent hydrocarbon group free of aliphatic unsaturation, having typically 1 to 10 carbon atoms, preferably 1 to 6 carbon atoms. Examples thereof include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; and substituted forms of the foregoing groups in which some or all of the hydrogen atoms are substituted by halogen atoms, e.g., fluorine, chlorine or bromine, such as 3,3,3-trifluoropropyl. Inter alia, alkyl, aryl, and 3,3,3-trifluoropropyl groups are preferred, with methyl, phenyl and 3,3,3-trifluoropropyl being more preferred.

In formula (2), c is a positive number of 0.7 to 2.2, preferably a positive number of 1.0 to 2.1, d is a positive number of 0.001 to 0.5, preferably a positive number of 0.005 to 0.1, and c+d is a positive number of 0.8 to 2.5, preferably a positive number of 1.0 to 2.5, more preferably a positive number of 1.5 to 2.2.

In the organohydrogenpolysiloxane as component (B), the number of silicon atoms per molecule (i.e., degree of polymerization) is typically 10 to 1,000. The number of silicon atoms is preferably 20 to 500, more preferably 20 to 100 because the composition is easier to handle or work and the cured product has better properties.

The molecular structure of the organohydrogenpolysiloxane as component (B) is not particularly limited as long as the above requirements are met.

The organohydrogenpolysiloxane as component (B) has a viscosity of typically 1 to 10,000 mPa·s, preferably 3 to 2,000 mPa·s, more preferably 10 to 1,000 mPa·s and is desirably liquid at room temperature (25°C).

Examples of the organohydrogenpolysiloxane having formula (2) include methylhydrogensiloxane/dimethylsiloxane cyclic copolymers, molecular chain both end dimethylhydrogensiloxy-capped methylhydrogenpolysiloxane, molecular chain both end dimethylhydrogensiloxy-capped methylhydrogen/dimethylsiloxane copolymers, molecular chain both end dimethylhydrogensiloxy-capped methylhydrogen/diphenylsiloxane copolymers, molecular chain both end dimethylhydrogensiloxy-capped methylhydrogen/dimethylsiloxane/diphenylsiloxane copolymers, molecular chain both end trimethylsiloxy-capped methylhydrogenpolysiloxane, molecular chain both end trimethylsiloxy-capped dimethylsiloxane/methylhydrogensiloxane copolymers, molecular chain both end trimethylsiloxy-capped methylhydrogensiloxane/diphenylsiloxane copolymers, molecular chain both end trimethylsiloxy-capped methylhydrogensiloxane/diphenylsiloxane/dimethylsiloxane copolymers, copolymers consisting of (CH₃)₂HSiO_{1/2} units, (CH₃)₂SiO units, and CH₃SiO_{3/2} units, copolymers consisting of (CH₃)₂HSiO_{1/2} units, (C₆H₅)₂SiO units, (CH₃)₂SiO units, and CH₃SiO_{3/2} units, copolymers consisting of (CH₃)(C₆H₅)HSiO_{1/2} units, (CH₃)₂SiO units, and CH₃SiO_{3/2} units, copolymers consisting of (CH₃)₂HSiO_{1/2} units, (CH₃)₂SiO units, and C₆H₅SiO_{3/2} units, copolymers consisting of (CH₃)(CF₃C₂H₄)HSiO_{1/2} units, (CH₃)(CF₃C₂H₄)SiO units, and CH₃SiO_{3/2} units, copolymers consisting of (CH₃)(CF₃C₂H₄)HSiO_{1/2} units, (CH₃)(CF₃C₂H₄)SiO units, (CH₃)₂SiO units, and CH₃SiO_{3/2} units, copolymers consisting of (CH₃)₂HSiO_{1/2} units, (CH₃)(CF₃C₂H₄)SiO units, and CF₃SiO_{3/2} units, copolymers consisting of (CH₃)₂HSiO_{1/2} units, (CH₃)(CF₃C₂H₄)SiO units, (CH₃)₂SiO units, and CH₃SiO_{3/2} units, and copolymers consisting of (CH₃)₂HSiO_{1/2} units, (CH₃)(CF₃C₂H₄)SiO units, (CH₃)₂SiO units, and (CF₃C₂H₄)SiO_{3/2} units.

The organohydrogenpolysiloxane as component (B) may be used alone or in admixture.

The organohydrogenpolysiloxane is synthesized by any prior art well-known methods.

The organohydrogenpolysiloxane as component (B) is blended in such an amount as to provide 0.1 to 2, preferably 0.2 to 2, more preferably 0.5 to 2 silicon-bonded hydrogen atoms (i.e., SiH groups) in component (B) per alkenyl group in component (A). If the amount is too small, the storage stability-improving effect may become insufficient. If the amount is too large, the heat conductive silicone cured product may have unstable physical properties.

Component (C) in the inventive composition is aluminum oxide having a Na⁺ ion content of up to 50 ppm as measured by heat extracting aluminum oxide powder with pure water at 60°C for 24 hours and analyzing the water layer by ion chromatography.

The Na⁺ ion content of aluminum oxide as measured by heat extracting aluminum oxide powder with pure water at 60°C for 24 hours and analyzing the water layer by ion chromatography is up to 50 ppm, preferably up to 30 ppm. If the Na⁺ ion content exceeds 50 ppm, component (E) will be deactivated with the lapse of time.

In order to obtain aluminum oxide having a Na⁺ ion content in the range, the Na⁺ ion content of commercially available aluminum oxide powder can be adjusted by dispersing the aluminum oxide powder in water, and stirring the dispersion at normal temperature (1 to 25°C) or at an elevated temperature, e.g., 60°C for reducing the process time, for thereby washing the aluminum oxide with water.

The aluminum oxide powder preferably has an average particle size of 1 to 100 µm, more preferably 5 to 50 µm as measured by the laser diffraction method. With respect to the shape of particles, ground particles, rounded particles, and spherical particles are preferred, with ground particles and spherical particles being more preferred. As long as the benefits of the invention are not impaired, the powder may be used alone or a mixture of two or more powders having different average particle sizes may be used. If the average particle size is less than 1 µm, there is a tendency of aggravating thermal conductivity because contacts between particles decrease and the interparticle contact thermal resistance increases. If the average particle size exceeds 100 µm, there is a tendency of aggravating thermal conductivity because the sheet surface becomes more irregular and the interfacial thermal resistance increases.

The heat conductive filler as component (C) is blended in an amount of 1,000 to 7,000 parts by weight, preferably 1,000 to 6,900 parts by weight, more preferably 1,000 to 6,700 parts by weight per 100 parts by weight of component (A). As long as the blending amount is in the range, the heat conductive addition curable silicone composition has the desired viscosity, thermal conductivity, and storage stability and cures into a heat conductive silicone product experiencing a minimal hardness change with time.

In the practice of the invention, components (A) to (C) as defined above are mixed preferably for at least 60 minutes while heating at a temperature of at least 70°C, preferably 100 to 200°C, more preferably 100 to 170°C, even more preferably 100 to 160°C, most preferably 100 to 150°C, whereby a heat-treated mixture of components (A) to (C) is obtained. Although the upper limit of the heat treatment time is not critical, the heat treatment is preferably performed for 60 to 240 minutes, more preferably for 60 to 180 minutes, even more preferably for 60 to 120 minutes. If the heat treatment temperature is lower than 70°C, the reaction of silicon-bonded hydrogen atoms in component (B) with reactive groups or reactive substances in component (C) which can aggravate storage stability, such as Al-OH groups or residual mineral acid is retarded. If the heat treatment temperature is high in excess of 200°C, components (A) and (B) or polymers themselves can be degraded. If the heat treatment time is too short, the reaction of silicon-bonded hydrogen atoms in component (B) with reactive groups or reactive substances in component (C) which can aggravate storage stability, such as Al-OH groups or residual mineral acid will not proceed to a full extent, and the storage stability-improving effect may be insufficient.

Component (D) in the inventive composition is an organohydrogenpolysiloxane having at least two silicon-bonded hydrogen atoms per molecule, represented by the average compositional formula (3):

R³ₑH_{f}SiO_{(4-e-f)/2} (3)

wherein R³ is independently an unsubstituted or substituted monovalent hydrocarbon group free of aliphatic unsaturation, e is a positive number of 0.7 to 2.2, f is a positive number of 0.001 to 0.5, and e+f is a positive number of 0.8 to 2.5. The organohydrogenpolysiloxane has preferably 2 to 100, more preferably 2 to 50, even more preferably 2 to 20 silicon-bonded hydrogen atoms per molecule.

In formula (3), R³ is independently an unsubstituted or substituted monovalent hydrocarbon group free of aliphatic unsaturation, having typically 1 to 10 carbon atoms, preferably 1 to 6 carbon atoms. Examples thereof include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; and substituted forms of the foregoing groups in which some or all of the hydrogen atoms are substituted by halogen atoms, e.g., fluorine, chlorine or bromine, such as 3,3,3-trifluoropropyl. Inter alia, alkyl, aryl and 3,3,3-trifluoropropyl groups are preferred, with methyl, phenyl and 3,3,3-trifluoropropyl being more preferred.

In formula (3), e is a positive number of 0.7 to 2.2, preferably a positive number of 1.0 to 2.1, f is a positive number of 0.001 to 0.5, preferably a positive number of 0.005 to 0.1, and e+f is a positive number of 0.8 to 2.5, preferably a positive number of 1.0 to 2.5, more preferably a positive number of 1.5 to 2.2.

In the organohydrogenpolysiloxane as component (D), the number of silicon atoms per molecule (i.e., degree of polymerization) is typically 10 to 1,000. The number of silicon atoms is preferably 15 to 500, more preferably 18 to 100 because the composition is easier to handle or work and the cured product has better properties.

The molecular structure of the organohydrogenpolysiloxane as component (D) is not particularly limited as long as the above requirements are met.

The organohydrogenpolysiloxane as component (D) has a viscosity of typically 1 to 10,000 mPa·s, preferably 3 to 2,000 mPa·s, more preferably 10 to 1,000 mPa·s and is desirably liquid at room temperature (25°C).

Examples of the organohydrogenpolysiloxane having formula (3) include methylhydrogensiloxane/dimethylsiloxane cyclic copolymers, molecular chain both end dimethylhydrogensiloxy-capped methylhydrogenpolysiloxane, molecular chain both end dimethylhydrogensiloxy-capped dimethylpolysiloxane, molecular chain both end dimethylhydrogensiloxy-capped methylhydrogen/dimethylsiloxane copolymers, molecular chain both end dimethylhydrogensiloxy-capped methylhydrogen/diphenylsiloxane copolymers, molecular chain both end dimethylhydrogensiloxy-capped methylhydrogen/dimethylsiloxane/diphenylsiloxane copolymers, molecular chain both end trimethylsiloxy-capped methylhydrogenpolysiloxane, molecular chain both end trimethylsiloxy-capped dimethylsiloxane/methylhydrogensiloxane copolymers, molecular chain both end trimethylsiloxy-capped methylhydrogensiloxane/diphenylsiloxane copolymers, molecular chain both end trimethylsiloxy-capped methylhydrogensiloxane/diphenylsiloxane/dimethylsiloxane copolymers, copolymers consisting of (CH₃)₂HSiO_{1/2} units, (CH₃)₂SiO units, and CH₃SiO_{3/2} units, copolymers consisting of (CH₃)₂HSiO_{1/2} units, (C₆H₅)₂SiO units, (CH₃)₂SiO units, and CH₃SiO_{3/2} units, copolymers consisting of (CH₃)(C₆H₅)HSiO_{1/2} units, (CH₃)₂SiO units, and CH₃SiO_{3/2} units, copolymers consisting of (CH₃)₂HSiO_{1/2} units, (CH₃)₂SiO units, and C₆H₅SiO_{3/2} units, copolymers consisting of (CH₃)(CF₃C₂H₄)HSiO_{1/2} units, (CH₃)(CF₃C₂H₄)SiO units, and CH₃SiO_{3/2} units, copolymers consisting of (CH₃)(CF₃C₂H₄)HSiO_{1/2} units, (CH₃)(CF₃C₂H₄)SiO units, (CH₃)₂SiO units, and CH₃SiO_{3/2} units, copolymers consisting of (CH₃)₂HSiO_{1/2} units, (CH₃)(CF₃C₂H₄)SiO units, and CH₃SiO_{3/2} units, copolymers consisting of (CH₃)₂HSiO_{1/2} units, (CH₃)(CF₃C₂H₄)SiO units, (CH₃)₂SiO units, and CH₃SiO_{3/2} units, and copolymers consisting of (CH₃)₂HSiO_{1/2} units, (CH₃)(CF₃C₂H₄)SiO units, (CH₃)₂SiO units, and (CF₃C₂H₄)SiO_{3/2} units.

The organohydrogenpolysiloxane as component (D) may be used alone or in admixture.

The organohydrogenpolysiloxane is synthesized by any prior art well-known methods.

Component (D) is represented by formula (3), and some examples thereof are the same as exemplified for component (B). That is, either an organohydrogenpolysiloxane which is identical with component (B) or an organohydrogenpolysiloxane which is identical with component (B), but different in structure and/or degree of polymerization may be used. While component (B) is used as a surface treating agent for component (C), component (D) is used as a crosslinker which reacts with alkenyl groups in component (A) to form a cured product.

Therefore, component (D) is used in such an amount as to provide 0.01 to 3, preferably 0.05 to 2, more preferably 0.2 to 1.5 SiH groups in component (D) per alkenyl group in component (A). If the number of SiH groups in component (D) is less than 0.01 per alkenyl group in component (A), the composition may become too soft, failing to obtain a stable silicone cured product. If the number of SiH groups in component (D) exceeds 3 per alkenyl group in component (A), the silicone cured product may become too hard and brittle.

In the practice of the invention, components (B) and (D) are preferably used in such amounts that the total number of SiH groups in components (B) and (D) may be 0.11 to 5, especially 0.25 to 4 per alkenyl group in component (A). If the total number of SiH groups in components (B) and (D) is less than 0.11 per alkenyl group in component (A), the composition may become too soft, failing to obtain a stable silicone cured product. If the total number of SiH groups in components (B) and (D) exceeds 5 per alkenyl group in component (A), the silicone cured product may become too hard and brittle.

Component (E) in the inventive composition is a platinum group metal catalyst, which promotes addition reaction of alkenyl groups in component (A) with silicon-bonded hydrogen atoms in components (B) and (D). For example, use may be made of chloroplatinic acid, alcohol-modified chloroplatinic acids, coordination compounds of chloroplatinic acid with olefins, aldehydes, vinylsiloxanes, or acetylene compounds, tetrakis(triphenylphosphine)palladium, and chlorotris(triphenylphosphine)rhodium. Platinum catalysts are preferred, and coordination compounds of chloroplatinic acid with vinylsiloxanes are most preferred.

The amount of component (E) blended may be a catalytic amount and is typically used in such an amount as to provide 1 to 200 ppm, preferably 2 to 100 ppm by weight of platinum group metal based on component (A). The amount of component (E) blended preferably falls in the range because adequate cure is ensured.

If necessary, the inventive composition may contain (F) a silane coupling agent. Suitable silane coupling agents (F) include vinyl, epoxy, acrylic, and long-chain alkyl based silane coupling agents, which may be used alone or in admixture. Inter alia, long-chain alkyl based silane coupling agents are preferred, and decyltrimethoxysilane is most preferred.

When component (F) is used herein, it preferably takes the form of a heat-treated mixture obtained by mixing component (F) with components (A) to (C) and heat treating them at a temperature of at least 70°C. Alternatively, component (C) may be previously treated with component (F). For the surface treatment of component (C) with component (F), any of spray mode through a fluid nozzle, agitation mode with shearing force, dry mode on a ball mill, mixer or the like, and wet mode using water or organic solvents may be employed. The agitation is performed to such an extent that spherical aluminum oxide particles may not be broken. In the dry mode, the system temperature or drying temperature after the treatment is determined as appropriate, depending on the type of surface treating agent, in the range at which the surface treating agent will not volatilize or decompose, and typically in the range of 80 to 180°C.

When component (F) is used, it is preferably added in an amount of 0.1 to 5 parts by weight, more preferably 1 to 5 parts by weight per 100 parts by weight of component (C). If the amount is less than 0.1 part by weight, the viscosity reducing effect is insufficient. If the amount exceeds 5 parts by weight, no additional effect is exerted.

If necessary, the inventive composition may contain (G) an organopolysiloxane containing at least one hydrolyzable silyl group per molecule, represented by the general formula (5), and having a viscosity at 25°C of 0.01 to 30 Pa·s. 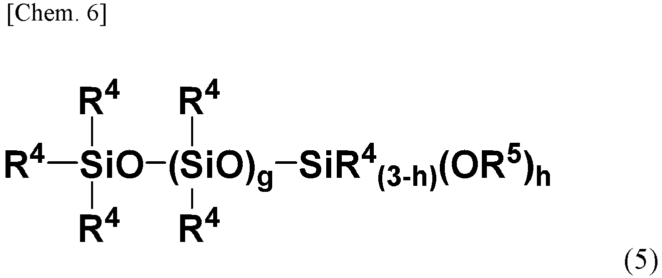 Herein R⁴ is independently an unsubstituted or substituted monovalent hydrocarbon group, R⁵ is independently an alkyl, alkoxyalkyl, alkenyl or acyl group, g is an integer of 5 to 100, and h is an integer of 1 to 3.

In formula (5), R⁴ is independently an unsubstituted or substituted monovalent hydrocarbon group of preferably 1 to 10 carbon atoms, more preferably 1 to 6 carbon atoms, even more preferably 1 to 3 carbon atoms. Suitable groups include straight alkyl groups, branched alkyl groups, cyclic alkyl groups, alkenyl groups, aryl groups, aralkyl groups, and halo-alkyl groups. Examples of the straight alkyl group include methyl, ethyl, propyl, hexyl, octyl, and decyl. Examples of the branched alkyl group include isopropyl, isobutyl, tert-butyl, and 2-ethylhexyl. Examples of the cyclic alkyl group include cyclopentyl and cyclohexyl. Examples of the alkenyl group include vinyl and allyl. Examples of the aryl group include phenyl and tolyl. Examples of the aralkyl group include 2-phenylethyl and 2-methyl-2-phenylethyl. Examples of the halo-alkyl group include 3,3,3-trifluoropropyl, 2-(nonafluorobutyl)ethyl, and 2-(heptadecafluorooctyl)ethyl. R⁴ is preferably methyl or phenyl.

In formula (5), R⁵ is independently an alkyl, alkoxyalkyl, alkenyl or acyl group. Suitable alkyl groups include straight alkyl groups, branched alkyl groups and cyclic alkyl groups as exemplified above for R⁴. The alkoxyalkyl groups are preferably of 2 to 10 carbon atoms, and examples thereof include methoxyethyl and methoxypropyl. Suitable alkenyl groups are as exemplified above for R, and preferably of 1 to 8 carbon atoms. The acyl groups are preferably of 2 to 10 carbon atoms and examples thereof include acetyl and octanoyl. R⁵ is preferably an alkyl group, with methyl and ethyl being especially preferred.

In formula (5), g is an integer of 5 to 100, preferably 8 to 50, and h is an integer of 1 to 3, preferably 3.

Preferred examples of the organopolysiloxane as component (G) are shown below. 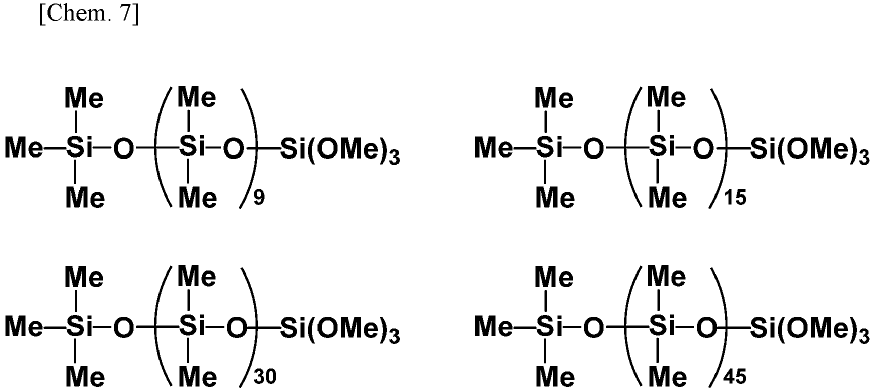 Herein, Me stands for methyl (the same holds true, hereinafter).

The organopolysiloxane as component (G) typically has a viscosity at 25°C of 0.01 to 30 Pa·s,preferably 0.01 to 10 Pa·s.If the viscosity is less than 0.01 Pa·s,there is a likelihood that component (G) bleeds out of the silicone composition, known as oil bleed. If the viscosity is higher than 30 Pa·s, the silicone composition becomes considerably poor in flow, aggravating coating operation.

When used, component (G) is blended in an amount of preferably 5 to 900 parts by weight, more preferably 10 to 900 parts by weight, even more preferably 15 to 700 parts by weight per 100 parts by weight of component (A). If the amount of component (G) blended is less than 5 parts by weight, the viscosity-reducing effect is low. If the amount exceeds 900 parts by weight, there is a likelihood that component (G) bleeds out of the silicone composition, known as oil bleed.

It is noted that when component (G) is blended, the preferred procedure involves the steps of mixing component (G) with components (A) to (C), heat treating the mixture at a temperature of at least 70°C, cooling the heat-treated mixture, and thereafter, adding components (D) and (E) to the cooled (heat treated) mixture.

In addition to the foregoing components (A) to (G), the inventive composition may contain various per-se known additives as additional components insofar as the objects of the invention are not compromised.

For example, there may be blended reaction inhibitors for adjusting the cure rate and storage stability, e.g., triallyl isocyanate alkyl maleates, acetylene alcohols such as ethynyl cyclohexanol, silanes thereof and siloxane modified compounds thereof; hydroperoxide, tetramethylethylenediamine, benzotriazole, colorants such as ferrous oxide and ferric oxide alone or in admixture, and thixotropic agents such as fumed silica. The amount of each additive is preferably 0.01 to 100,000 ppm by weight based on the composition.

The inventive composition can be obtained by heating and mixing components (A) to (C), optionally components (F) and (G) at 70°C or above to form a heat-treated mixture, cooling the mixture to a temperature of 0 to 50°C, preferably room temperature (1 to 25°C), adding components (D) and (E) and if necessary, other additives thereto, and mixing them until uniform.

The inventive composition has a thermal conductivity of 2.0 to 7.0 W/m·k, preferably 2.2 to 7.0 W/m·k as measured by the hot disk method according to ISO 22007-2. If the thermal conductivity is too low, the ability to dissipate the heat from a heat-generating electronic part may become insufficient. In order that the composition have a thermal conductivity in the range, the amount of component (C) blended is adjusted to the above-specified range.

The inventive composition has a viscosity at 25°C of 30 to 800 Pa·s,preferably 30 to 700 Pa·s as measured by a spiral viscometer under conditions: rotor A, speed 10 rpm, and shear rate 6 sec⁻¹. If the viscosity is too low, the composition may be insufficient in shape retention. If the viscosity is too high, the composition may be difficult to work. In order that the composition have a viscosity in the range, the amount of component (C) blended is adjusted to the above-specified range.

The conditions for curing the inventive composition may be the same as the curing conditions commonly used in heat conductive addition curable silicone compositions, that is, the composition may cured at elevated temperature or at room temperature. For heat curing of the composition, a heating temperature of at least 80°C is sufficient in most cases although the temperature depends on the desired curing time.

The cured product of the inventive composition should preferably have a hardness in the range of 5 to 95, more preferably 10 to 90 as measured by Shore 00 hardness tester prescribed in ASTM D 2240-05.

### [Second Embodiment]

A second embodiment of the invention is a heat conductive, addition curable silicone composition of two pack type, consisting of
a first pack containing
   a heat-treated mixture obtained by heat treating at a temperature of at least 70°C (A) an organopolysiloxane having at least two silicon-bonded alkenyl groups per molecule, represented by the average compositional formula (1):

      RₐR¹_{b}SiO_{(4-a-b)/2} (1)
   wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4, and (C) aluminum oxide having a Na⁺ ion content of up to 50 ppm as measured by heat extracting aluminum oxide powder with pure water at 60°C for 24 hours and analyzing the water layer by ion chromatography, and (E) a platinum group metal catalyst in such an amount as to provide 1 to 200 ppm of platinum group metal based on the total weight of component (A), and
a second pack containing
   a heat-treated mixture obtained by heat treating at a temperature of at least 70°C (A) an organopolysiloxane having at least two silicon-bonded alkenyl groups per molecule, represented by the average compositional formula (1):

      RₐR¹_{b}SiO_{(4-a-b)/2} (1)
   wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4, (B) an organohydrogenpolysiloxane having at least three silicon-bonded hydrogen atoms per molecule, represented by the average compositional formula (2):

      R²_{c}H_{d}SiO_{(4-c-d)/2} (2)
   wherein R² is independently an unsubstituted or substituted monovalent hydrocarbon group free of aliphatic unsaturation, c is a positive number of 0.7 to 2.2, d is a positive number of 0.001 to 0.5, and c+d is a positive number of 0.8 to 2.5, in such an amount as to provide 0.1 to 2 silicon-bonded hydrogen atoms (i.e., SiH groups) in component (B) per alkenyl group in the total of component (A), and (C) aluminum oxide having a Na⁺ ion content of up to 50 ppm as measured by heat extracting aluminum oxide powder with pure water at 60°C for 24 hours and analyzing the water layer by ion chromatography, and
   (H) an organohydrogenpolysiloxane having two silicon-bonded hydrogen atoms per molecule, represented by the average compositional formula (4):

      R⁷ⱼHₖSiO_{(4-j-k)/2} (4)
   wherein R⁷ is independently an unsubstituted or substituted monovalent hydrocarbon group free of aliphatic unsaturation, j is a positive number of 0.7 to 2.2, k is a positive number of 0.001 to 0.5, and j+k is a positive number of 0.8 to 2.5, in such an amount as to provide 0.01 to 3 silicon-bonded hydrogen atoms (i.e., SiH groups) in component (H) per alkenyl group in the total of component (A),
wherein the first pack is free of components (B) and (H), the second pack is free of component (E), the total amount of component (A) in the composition is 100 parts by weight, the total amount of component (C) is 1,000 to 7,000 parts by weight, each of the first and second packs has a thermal conductivity of 2.0 to 7.0 W/m·k as measured by the hot disk method according to ISO 22007-2, and a viscosity at 25°C of 30 to 800 Pa·s as measured by a spiral viscometer under conditions: rotor A, speed 10 rpm, and shear rate 6 sec⁻¹.

Component (A) in the inventive composition is a main component or base polymer in the composition. Component (A) is an organopolysiloxane having at least two alkenyl groups bonded to silicon atoms (referred to as "silicon-bonded alkenyl groups," hereinafter) per molecule, represented by the average compositional formula (1). The number of silicon-bonded alkenyl groups per molecule is at least 2, preferably 2 to 50, more preferably 2 to 20. The silicon-bonded alkenyl groups may be attached to a silicon atom at the end of the molecular chain or a silicon atom at a non-end position of the molecular chain (i.e., other than the molecular chain end), or a combination thereof.

RₐR¹_{b}SiO_{(4-a-b)/2} (1)

Herein R is independently an alkenyl group, R¹ is independently an unsubstituted or substituted monovalent hydrocarbon group free of aliphatic unsaturation, "a" is a positive number of 0.0001 to 0.2, "b" is a positive number of 1.7 to 2.2, and a+b is a positive number of 1.9 to 2.4.

In formula (1), R is independently an alkenyl group of typically 2 to 6 carbon atoms, preferably 2 to 4 carbon atoms. Examples thereof include lower alkenyl groups such as vinyl, allyl, propenyl, isopropenyl, butenyl, and isobutenyl, with vinyl being most preferred.

In formula (1), R¹ is independently an unsubstituted or substituted monovalent hydrocarbon group free of aliphatic unsaturation, having typically 1 to 10 carbon atoms, preferably 1 to 6 carbon atoms. Examples thereof include alkyl groups such as methyl, ethyl, propyl, isopropyl, butyl, isobutyl, tert-butyl, pentyl, hexyl, cyclohexyl, octyl and decyl; aryl groups such as phenyl and tolyl; aralkyl groups such as benzyl and phenylethyl; and substituted forms of the foregoing groups in which some or all of the hydrogen atoms are substituted by halogen atoms, e.g., fluorine, chlorine or bromine, such as chloromethyl and 3,3,3-trifluoropropyl. From the aspect of ease of synthesis, methyl, phenyl and 3,3,3-trifluoropropyl are preferred.

In formula (1), "a" is a positive number of 0.0001 to 0.2, preferably a positive number of 0.0005 to 0.1, "b" is a positive number of 1.7 to 2.2, preferably a positive number of 1.9 to 2.0, and a+b is a positive number of 1.9 to 2.4, preferably a positive number of 1.95 to 2.05.

The molecular structure of the organopolysiloxane as component (A) is not particularly limited and may be any of a linear structure, branched chain structure containing RSiO_{3/2} units, R¹SiO_{3/2} units, SiO₂ units, and other units in some parts of the molecular chain wherein groups R and R¹ are as defined above, cyclic structure, three-dimensional network (or resinous) structure, and mixture thereof. Especially preferred is a linear diorganopolysiloxane based on a backbone consisting essentially of repeating diorganosiloxane units and capped at both ends of the molecular chain with triorganosiloxy groups.

The organopolysiloxane as component (A) should preferably have a viscosity of 50 to 100,000 mPa·s, more preferably 100 to 10,000 mPa·s. As long as the viscosity is in the range of 50 to 100,000 mPa·s, the cured product has satisfactory strength, flow and workability. It is noted that the viscosity is as measured at 25°C by a rotational viscometer (the same holds true, hereinafter).

Exemplary of the organopolysiloxane as component (A) meeting the above requirements are those having the general formula (1A): 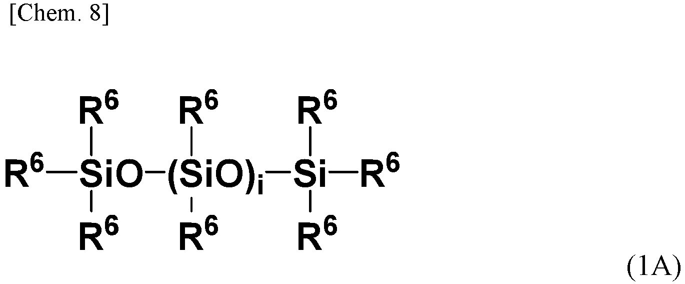 wherein R⁶ is independently an unsubstituted or substituted monovalent hydrocarbon group, at least two of R⁶ being alkenyl groups, and i is an integer of 20 to 2,000.

In formula (1A), the unsubstituted or substituted monovalent hydrocarbon groups represented by R⁶ are as defined above for R (alkenyl groups) and R¹ (unsubstituted or substituted monovalent hydrocarbon groups free of aliphatic unsaturation), and their carbon count and illustrative examples are also the same. Notably, at least two of groups R⁶ are alkenyl groups, preferably 2 to 50 groups, more preferably 2 to 20 groups being alkenyl groups. The subscript "i" is preferably an integer of 40 to 1,200, more preferably 50 to 600.

Examples of the organopolysiloxane having formula (1A) include molecular chain both end dimethylvinylsiloxy-capped dimethylpolysiloxane, molecular chain both end trimethylsiloxy-capped dimethylsiloxane/methylvinylsiloxane copolymers, molecular chain one end trimethylsiloxy-capped, one end dimethylvinylsiloxy-capped dimethylsiloxane/methylvinylsiloxane copolymers, molecular chain both end dimethylvinylsiloxy-capped dimethylsiloxane/methylvinylsiloxane copolymers, and molecular chain both end dimethylvinylsiloxy-capped dimethylsiloxane/diphenylsiloxane copolymers.

The organopolysiloxane as component (A) may be used alone or in admixture of two or more.

The alkenyl-containing organopolysiloxane is per se known and prepared by any prior art well-known methods.

It is noted that component (A) is used in both the first and second packs. A ratio of portions of component (A) divided in the first and second packs is not particularly limited as long as the first and second packs are mixed in a substantially equal weight ratio.

Component (B) in the inventive composition is an organohydrogenpolysiloxane having at least three silicon-bonded hydrogen atoms per molecule, which serves as a surface treating agent for aluminum oxide as component (C) in the second pack and crosslinker. That is, component (B) is essential for the inventive composition in the sense that during heat treatment at high temperature, component (B) is partially consumed by dehydrogenation reaction with Al-OH groups remaining on the surface of component (C) in the second pack and residues of the surface treating agent in the form of mineral acid, and the remaining silicon-bonded hydrogen atoms undergo addition reaction with alkenyl groups in overall component (A) in the first and second packs.

Component (B) is an organohydrogenpolysiloxane having at least three hydrogen atoms bonded to silicon atoms (referred to as "silicon-bonded hydrogen atoms," hereinafter) per molecule, represented by the average compositional formula (2). The number of silicon-bonded hydrogen atoms per molecule in the organohydrogenpolysiloxane is preferably 3 to 100, more preferably 3 to 50, most preferably 3 to 20. The silicon-bonded hydrogen atom may be located at an end of the molecular chain or an intermediate position of the molecular chain or both.

R²_{c}H_{d}SiO_{(4-c-d)/2} (2)

Herein R² is independently an unsubstituted or substituted monovalent hydrocarbon group free of aliphatic unsaturation, c is a positive number of 0.7 to 2.2, d is a positive number of 0.001 to 0.5, and c+d is a positive number of 0.8 to 2.5.

In formula (2), R² is independently an unsubstituted or substituted monovalent hydrocarbon group free of aliphatic unsaturation, having typically 1 to 10 carbon atoms, preferably 1 to 6 carbon atoms. Examples thereof include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; and substituted forms of the foregoing groups in which some or all of the hydrogen atoms are substituted by halogen atoms, e.g., fluorine, chlorine or bromine, such as 3,3,3-trifluoropropyl. Inter alia, alkyl, aryl, and 3,3,3-trifluoropropyl groups are preferred, with methyl, phenyl and 3,3,3-trifluoropropyl being more preferred.

In formula (2), c is a positive number of 0.7 to 2.2, preferably a positive number of 1.0 to 2.1, d is a positive number of 0.001 to 0.5, preferably a positive number of 0.005 to 0.1, and c+d is a positive number of 0.8 to 2.5, preferably a positive number of 1.0 to 2.5, more preferably a positive number of 1.5 to 2.2.

In the organohydrogenpolysiloxane as component (B), the number of silicon atoms per molecule (i.e., degree of polymerization) is typically 10 to 1,000. The number of silicon atoms is preferably 20 to 500, more preferably 20 to 100 because the composition is easier to handle or work and the cured product has better properties.

The molecular structure of the organohydrogenpolysiloxane as component (B) is not particularly limited as long as the above requirements are met.

The organohydrogenpolysiloxane as component (B) has a viscosity of typically 1 to 10,000 mPa·s, preferably 3 to 2,000 mPa·s, more preferably 10 to 1,000 mPa·s and is desirably liquid at room temperature (25°C).

Examples of the organohydrogenpolysiloxane having formula (2) include methylhydrogensiloxane/dimethylsiloxane cyclic copolymers, molecular chain both end dimethylhydrogensiloxy-capped methylhydrogenpolysiloxane, molecular chain both end dimethylhydrogensiloxy-capped methylhydrogen/dimethylsiloxane copolymers, molecular chain both end dimethylhydrogensiloxy-capped methylhydrogen/diphenylsiloxane copolymers, molecular chain both end dimethylhydrogensiloxy-capped methylhydrogen/dimethylsiloxane/diphenylsiloxane copolymers, molecular chain both end trimethylsiloxy-capped methylhydrogenpolysiloxane, molecular chain both end trimethylsiloxy-capped dimethylsiloxane/methylhydrogensiloxane copolymers, molecular chain both end trimethylsiloxy-capped methylhydrogensiloxane/diphenylsiloxane copolymers, molecular chain both end trimethylsiloxy-capped methylhydrogensiloxane/diphenylsiloxane/dimethylsiloxane copolymers, copolymers consisting of (CH₃)₂HSiO_{1/2} units, (CH₃)₂SiO units, and CH₃SiO_{3/2} units, copolymers consisting of (CH₃)₂HSiO_{1/2} units, (C₆H₅)₂SiO units, (CH₃)₂SiO units, and CH₃SiO_{3/2} units, copolymers consisting of (CH₃)(C₆H₅)HSiO_{1/2} units, (CH₃)₂SiO units, and CH₃SiO_{3/2} units, copolymers consisting of (CH₃)₂HSiO_{1/2} units, (CH₃)₂SiO units, and C₆H₅SiO_{3/2} units, copolymers consisting of (CH₃)(CF₃C₂H₄)HSiO_{1/2} units, (CH₃)(CF₃C₂H₄)SiO units, and CH₃SiO_{3/2} units, copolymers consisting of (CH₃)(CF₃C₂H₄)HSiO_{1/2} units, (CH₃)(CF₃C₂H₄)SiO units, (CH₃)₂SiO units, and CH₃SiO_{3/2} units, copolymers consisting of (CH₃)₂HSiO_{1/2} units, (CH₃)(CF₃C₂H₄)SiO units, and CH₃SiO_{3/2} units, copolymers consisting of (CH₃)₂HSiO_{1/2} units, (CH₃)(CF₃C₂H₄)SiO units, (CH₃)₂SiO units, and CH₃SiO_{3/2} units, and copolymers consisting of (CH₃)₂HSiO_{1/2} units, (CH₃)(CF₃C₂H₄)SiO units, (CH₃)₂SiO units, and (CF₃C₂H₄)SiO_{3/2} units.

The organohydrogenpolysiloxane as component (B) may be used alone or in admixture.

The organohydrogenpolysiloxane is synthesized by any prior art well-known methods.

The organohydrogenpolysiloxane as component (B) is blended in such an amount as to provide 0.1 to 2, preferably 0.1 to 1.8, more preferably 0.1 to 1.5 silicon-bonded hydrogen atoms (i.e., SiH groups) in component (B) per alkenyl group in overall component (A) in the first and second packs. If the amount is too small, the storage stability-improving effect may become insufficient. If the amount is too large, the heat conductive silicone cured product may have unstable physical properties.

Component (C) in the inventive composition is aluminum oxide having a Na⁺ ion content of up to 50 ppm as measured by heat extracting aluminum oxide powder with pure water at 60°C for 24 hours and analyzing the water layer by ion chromatography.

The Na⁺ ion content of aluminum oxide as measured by heat extracting aluminum oxide powder with pure water at 60°C for 24 hours and analyzing the water layer by ion chromatography is up to 50 ppm, preferably up to 30 ppm. If the Na⁺ ion content exceeds 50 ppm, component (E) will be deactivated with the lapse of time.

In order to obtain aluminum oxide having a Na⁺ ion content in the range, the Na⁺ ion content of commercially available aluminum oxide powder can be adjusted by dispersing the aluminum oxide powder in water, and stirring the dispersion at normal temperature (1 to 25°C) or at an elevated temperature, e.g., 60°C for reducing the process time, for thereby washing the aluminum oxide with water.

The aluminum oxide powder preferably has an average particle size of 1 to 100 µm, more preferably 1 to 80 µm as measured by the laser diffraction method. With respect to the shape of particles, ground particles, rounded particles, and spherical particles are preferred, with ground particles and spherical particles being more preferred. As long as the benefits of the invention are not impaired, the powder may be used alone or a mixture of two or more powders having different average particle sizes may be used. If the average particle size is less than 1 µm, there is a tendency of aggravating thermal conductivity because contacts between particles decrease and the interparticle contact thermal resistance increases. If the average particle size exceeds 100 µm, there is a tendency of aggravating thermal conductivity because the sheet surface becomes more irregular and the interfacial thermal resistance increases.

The heat conductive filler as component (C) (overall component (C)) is blended in an amount of 1,000 to 7,000 parts by weight, preferably 1,000 to 6,900 parts by weight, more preferably 1,000 to 6,700 parts by weight per 100 parts by weight of overall component (A). As long as the blending amount is in the range, the heat conductive addition curable silicone composition has the desired viscosity, thermal conductivity, and storage stability and cures into a heat conductive silicone product experiencing a minimized hardness change with time.

It is noted that component (C) is used in both the first and second packs. A ratio of portions of component (C) divided in the first and second packs is not particularly limited as long as the first and second packs are mixed in a substantially equal weight ratio.

Component (H) in the inventive composition is an organohydrogenpolysiloxane having two silicon-bonded hydrogen atoms per molecule, represented by the average compositional formula (4):

R⁷ⱼHₖSiO_{(4-j-k)/2} (4)

wherein R⁷ is independently an unsubstituted or substituted monovalent hydrocarbon group free of aliphatic unsaturation, j is a positive number of 0.7 to 2.2, k is a positive number of 0.001 to 0.5, and j+k is a positive number of 0.8 to 2.5.

In formula (4), R⁷ is independently an unsubstituted or substituted monovalent hydrocarbon group free of aliphatic unsaturation, having typically 1 to 10 carbon atoms, preferably 1 to 6 carbon atoms. Examples thereof include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; and substituted forms of the foregoing groups in which some or all of the hydrogen atoms are substituted by halogen atoms, e.g., fluorine, chlorine or bromine, such as 3,3,3-trifluoropropyl. Inter alia, alkyl, aryl, and 3,3,3-trifluoropropyl groups are preferred, with methyl, phenyl and 3,3,3-trifluoropropyl being more preferred.

In formula (4), j is a positive number of 0.7 to 2.2, preferably a positive number of 1.0 to 2.1, k is a positive number of 0.001 to 0.5, preferably a positive number of 0.005 to 0.1, and j+k is a positive number of 0.8 to 2.5, preferably a positive number of 1.0 to 2.5, more preferably a positive number of 1.5 to 2.2.

While the organohydrogenpolysiloxane as component (H) has two silicon-bonded hydrogen atoms per molecule, the silicon-bonded hydrogen atom may be located at the end of the molecular chain or at an intermediate position of the molecular chain, or one at the end and one at the intermediate position, preferably at the end of the molecular chain.

In the organohydrogenpolysiloxane as component (H), the number of silicon atoms per molecule (i.e., degree of polymerization) is typically 10 to 1,000. The number of silicon atoms is preferably 15 to 500, more preferably 18 to 100 because the composition is easier to handle or work and the cured product has better properties.

The molecular structure of the organohydrogenpolysiloxane as component (H) is not particularly limited as long as the above requirements are met.

The organohydrogenpolysiloxane as component (H) has a viscosity of typically 1 to 10,000 mPa·s, preferably 3 to 2,000 mPa·s, more preferably 10 to 1,000 mPa·s and is desirably liquid at room temperature (25°C).

Examples of the organohydrogenpolysiloxane having formula (4) include methylhydrogensiloxane/dimethylsiloxane cyclic copolymers, molecular chain both end dimethylhydrogensiloxy-capped dimethylpolysiloxane, molecular chain both end trimethylsiloxy-capped methylhydrogenpolysiloxane, molecular chain both end trimethylsiloxy-capped dimethylsiloxane/methylhydrogensiloxane copolymers, molecular chain both end trimethylsiloxy-capped methylhydrogensiloxane/diphenylsiloxane copolymers, molecular chain both end trimethylsiloxy-capped methylhydrogensiloxane/diphenylsiloxane/dimethylsiloxane copolymers, copolymers consisting of (CH₃)₂HSiO_{1/2} units, (CH₃)₂SiO units, and CH₃SiO_{3/2} units, copolymers consisting of (CH₃)₂HSiO_{1/2} units, (C₆H₅)₂SiO units, (CH₃)₂SiO units, and CH₃SiO_{3/2} units, copolymers consisting of (CH₃)(C₆H₅)HSiO_{1/2} units, (CH₃)₂SiO units, and CH₃SiO_{3/2} units, copolymers consisting of (CH₃)₂HSiO_{1/2} units, (CH₃)₂SiO units, and C₆H₅SiO_{3/2} units, copolymers consisting of (CH₃)(CF₃C₂H₄)HSiO_{1/2} units, (CH₃)(CF₃C₂H₄)SiO units, and CH₃SiO_{3/2} units, copolymers consisting of (CH₃)(CF₃C₂H₄)HSiO_{1/2} units, (CH₃)(CF₃C₂H₄)SiO units, (CH₃)₂SiO units, and CH₃SiO_{3/2} units, copolymers consisting of (CH₃)₂HSiO_{1/2} units, (CH₃)(CF₃C₂H₄)SiO units, and CH₃SiO_{3/2} units, copolymers consisting of (CH₃)₂HSiO_{1/2} units, (CH₃)(CF₃C₂H₄)SiO units, (CH₃)₂SiO units, and CH₃SiO_{3/2} units, and copolymers consisting of (CH₃)₂HSiO_{1/2} units, (CH₃)(CF₃C₂H₄)SiO units, (CH₃)₂SiO units, and (CF₃C₂H₄)SiO_{3/2} units.

The organohydrogenpolysiloxane as component (H) may be used alone or in admixture.

The organohydrogenpolysiloxane is synthesized by any prior art well-known methods.

Component (H) has two silicon-bonded hydrogen atoms (i.e., SiH groups) per molecule. In this sense, component (H) is different from component (B) having at least three silicon-bonded hydrogen atoms per molecule. Also, component (B) serves as a surface treating agent for component (C) in the second pack whereas component (H) serves as a crosslinker for forming a cured product by reacting with alkenyl groups in overall component (A) in the first and second packs. Specifically, since component (H) has only two SiH groups, three-dimensional crosslinking does not take place if even one is deactivated. For this reason, component (C) in the second pack is surface-treated with component (B) so that component (H) blended in the second pack may not degrade with the lapse of time.

Thus, component (H) is used in such an amount as to provide 0.01 to 3, preferably 0.05 to 2, more preferably 0.2 to 1.5 SiH groups in component (H) per alkenyl group in overall component (A) in the first and second packs. If the number of SiH groups in component (H) is less than 0.01 per alkenyl group in component (A), the composition may become too soft, failing to obtain a stable silicone cured product. If the number of SiH groups in component (H) is more than 3 per alkenyl group in component (A), the silicone cured product may become too hard and brittle.

In the practice of the invention, component (H) is used in such an amount that the total number of SiH groups in components (B) and (H) is 0.11 to 5, especially 0.25 to 4 per alkenyl group in overall component (A) in the first and second packs. If the total number of SiH groups in components (B) and (H) is less than 0.11 per alkenyl group in component (A), the composition may become too soft, failing to obtain a stable silicone cured product. If the total number of SiH groups in components (B) and (H) is more than 5 per alkenyl group in component (A), the silicone cured product may become too hard and brittle.

Component (E) in the inventive composition is a platinum group metal catalyst, which promotes addition reaction of alkenyl groups in component (A) (overall component (A) in the first and second packs) with silicon-bonded hydrogen atoms in components (B) and (H). Examples of the catalyst which can be used herein include chloroplatinic acid, alcohol-modified chloroplatinic acids, coordination compounds of chloroplatinic acid with olefins, aldehydes, vinylsiloxanes, or acetylene compounds, tetrakis(triphenylphosphine)palladium, and chlorotris(triphenylphosphine)rhodium. Platinum catalysts are preferred, and coordination compounds of chloroplatinic acid with vinylsiloxanes are most preferred.

The amount of component (E) blended may be a catalytic amount. It is typically used in such an amount as to provide 1 to 200 ppm, preferably 2 to 100 ppm of platinum group metal based on the total weight of component (A). The amount of component (E) blended preferably falls in the range because adequate cure is ensured.

If necessary, the inventive composition may contain (F) a silane coupling agent. When blended, component (F) exerts an effect of reducing the viscosity of the first and second packs. Suitable silane coupling agents (F) include vinyl, epoxy, acrylic, and long-chain alkyl based silane coupling agents, which may be used alone or in admixture. Inter alia, long-chain alkyl based silane coupling agents are preferred, and decyltrimethoxysilane is most preferred.

When component (F) is used herein, it preferably takes the form of a heat-treated mixture obtained by mixing component (F) with components (A) and (C) in the first pack or components (A) to (C) in the second pack and heat treating them at a temperature of at least 70°C. Alternatively, component (C) may be previously treated with component (F). For the surface treatment of component (C) with component (F), any of spray mode through a fluid nozzle, agitation mode with shearing force, dry mode on a ball mill, mixer or the like, and wet mode using water or organic solvents may be employed. The agitation is performed to such an extent that spherical aluminum oxide particles may not be broken. In the dry mode, the system temperature or drying temperature after the treatment is determined as appropriate, depending on the type of surface treating agent, in the range at which the surface treating agent will not volatilize or decompose, and typically in the range of 80 to 180°C.

When component (F) is used, it is preferably added in an amount of 0.1 to 5 parts by weight, more preferably 1 to 5 parts by weight per 100 parts by weight of overall component (C). If the amount is less than 0.1 part by weight, the viscosity reducing effect is insufficient. If the amount exceeds 5 parts by weight, no additional effect is exerted.

It is noted that component (F) is used in both the first and second packs. A ratio of portions of component (F) divided in the first and second packs is not particularly limited. For example, equal amounts of component (F) may be blended in the first and second packs.

If necessary, the inventive composition may contain (G) an organopolysiloxane containing at least one hydrolyzable silyl group per molecule, represented by the general formula (5), and having a viscosity at 25°C of 0.01 to 30 Pa·s. Blending component (G) is effective for reducing the viscosity of the first and second packs. 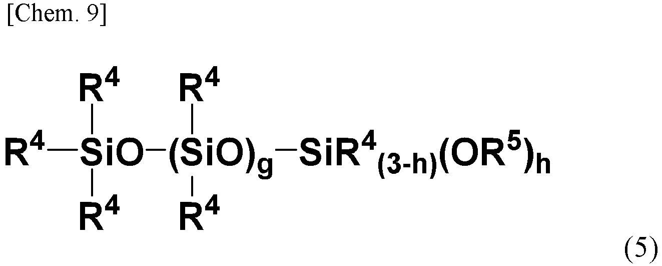 Herein R⁴ is independently an unsubstituted or substituted monovalent hydrocarbon group, R⁵ is independently an alkyl, alkoxyalkyl, alkenyl or acyl group, g is an integer of 5 to 100, and h is an integer of 1 to 3.

In formula (5), R⁴ is independently an unsubstituted or substituted monovalent hydrocarbon group of preferably 1 to 10 carbon atoms, more preferably 1 to 6 carbon atoms, even more preferably 1 to 3 carbon atoms. Suitable groups include straight alkyl groups, branched alkyl groups, cyclic alkyl groups, alkenyl groups, aryl groups, aralkyl groups, and halo-alkyl groups. Examples of the straight alkyl group include methyl, ethyl, propyl, hexyl, octyl, and decyl. Examples of the branched alkyl group include isopropyl, isobutyl, tert-butyl, and 2-ethylhexyl. Examples of the cyclic alkyl group include cyclopentyl and cyclohexyl. Examples of the alkenyl group include vinyl and allyl. Examples of the aryl group include phenyl and tolyl. Examples of the aralkyl group include 2-phenylethyl and 2-methyl-2-phenylethyl. Examples of the halo-alkyl group include 3,3,3-trifluoropropyl, 2-(nonafluorobutyl)ethyl, and 2-(heptadecafluorooctyl)ethyl. R⁴ is preferably methyl or phenyl.

In formula (5), R⁵ is independently an alkyl, alkoxyalkyl, alkenyl or acyl group. Suitable alkyl groups include straight alkyl groups, branched alkyl groups and cyclic alkyl groups as exemplified above for R⁴. The alkoxyalkyl groups are preferably of 2 to 10 carbon atoms, and examples thereof include methoxyethyl and methoxypropyl. Suitable alkenyl groups are as exemplified above for R, and preferably of 1 to 8 carbon atoms. The acyl groups are preferably of 2 to 10 carbon atoms and examples thereof include acetyl and octanoyl. R⁵ is preferably an alkyl group, with methyl and ethyl being especially preferred.

In formula (5), g is an integer of 5 to 100, preferably 8 to 50, and h is an integer of 1 to 3, preferably 3.

Preferred examples of the organopolysiloxane as component (G) are shown below. 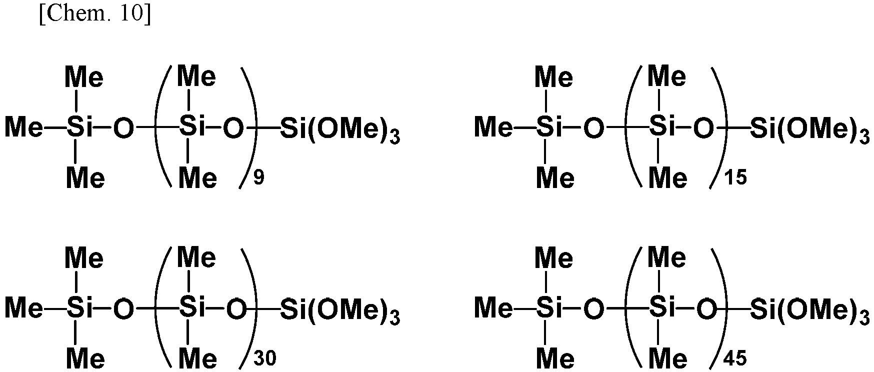 Herein, Me stands for methyl (the same holds true, hereinafter).

The organopolysiloxane as component (G) typically has a viscosity of 0.01 to 30 Pa·s, preferably 0.01 to 10 Pa·s.If the viscosity is less than 0.01 Pa·s,there is a likelihood that component (G) bleeds out of the silicone composition, known as oil bleed. If the viscosity is higher than 30 Pa·s, the silicone composition becomes considerably poor in flow, aggravating coating operation.

When used, component (G) is blended in an amount of preferably 5 to 900 parts by weight, more preferably 10 to 900 parts by weight, even more preferably 15 to 700 parts by weight per 100 parts by weight of overall component (A). If the amount of component (G) blended is less than 5 parts by weight, the viscosity-reducing effect is low. If the amount exceeds 900 parts by weight, there is a likelihood that component (G) bleeds out of the silicone composition, known as oil bleed.

It is noted that component (G) is used in both the first and second packs. A ratio of portions of component (G) divided in the first and second packs is not particularly limited. For example, equal amounts of component (G) may be blended in the first and second packs.

It is noted that when component (G) is blended, the preferred procedure involves the steps of mixing component (G) with components (A) and (C) in the first pack or components (A) to (C) in the second pack, heat treating the mixture at a temperature of at least 70°C, cooling the heat-treated mixture, and thereafter, adding component (E) or (H) to the cooled (heat treated) mixture.

In addition to the foregoing components (A) to (C) and (E) to (H), the inventive composition may contain various per-se known additives as additional components insofar as the objects of the invention are not compromised.

For example, there may be blended reaction inhibitors for adjusting the cure rate and storage stability, e.g., triallyl isocyanate alkyl maleates, acetylene alcohols such as ethynyl cyclohexanol, silanes thereof and siloxane modified compounds thereof; hydroperoxide, tetramethylethylenediamine, benzotriazole, colorants such as ferrous oxide and ferric oxide alone or in admixture, and thixotropic agents such as fumed silica. Each of these additives is preferably used in an amount of 0.01 to 100,000 ppm by weight based on the composition.

The inventive composition is a heat conductive addition curable composition of two pack type, i.e., first and second packs, containing components (A) to (C), (E), (H), optionally components (F) and (G) and other components.

The first pack contains a heat-treated mixture obtained by combining components (A) and (C), optionally components (F) and (G) and heat treating them at a temperature of at least 70°C, and component (E), but does not contain components (B) and (H). The second pack contains a heat-treated mixture obtained by combining components (A), (B) and (C), optionally components (F) and (G) and heat treating them at a temperature of at least 70°C, and component (H) and optionally other additives, but does not contain component (E).

### [First pack]

The first pack contains a heat-treated mixture obtained by combining components (A) and (C), optionally components (F) and (G) and heat treating them at a temperature of at least 70°C, and component (E), but does not contain components (B) and (H).

The heat-treated mixture is prepared by mixing components (A) and (C), optionally components (F) and (G), preferably for at least 60 minutes while heating at a temperature of at least 70°C, preferably 100 to 200°C, more preferably 100 to 170°C, even more preferably 100 to 160°C, most preferably 100 to 150°C. The upper limit of heat treatment time is not critical and heat treatment is performed for preferably 60 to 240 minutes, more preferably 60 to 180 minutes, even more preferably 60 to 120 minutes. If the heat treatment temperature is below 70°C, the surface treatment of component (C) with component (A) may be short. If the heat treatment temperature is high in excess of 200°C, components (A), (F) and (G) can be decomposed. Also, if the heat treatment time is too short, the surface treatment of component (C) with component (A) may be short.

The heat-treated mixture obtained by combining components (A) and (C), optionally components (F) and (G) and heat treating them at a temperature of at least 70°C is preferably cooled to a temperature of 0 to 50°C, more preferably normal temperature (1 to 25°C), after which component (E) is added to the cool (heat-treated) mixture and mixed until uniform. The conditions under which the heat-treated mixture and component (E) are mixed include normal temperature (1 to 25°C) and about 5 to 30 minutes. In this way, the first pack is obtained.

### [Second pack]

The second pack contains a heat-treated mixture obtained by combining components (A), (B) and (C), optionally components (F) and (G) and heat treating them at a temperature of at least 70°C, and component (H) and optionally other additives, but does not contain component (E).

The heat-treated mixture is prepared by mixing components (A), (B) and (C), optionally components (F) and (G), preferably for at least 60 minutes while heating at a temperature of at least 70°C, preferably 100 to 200°C, more preferably 100 to 170°C, even more preferably 100 to 160°C, most preferably 100 to 150°C. The upper limit of heat treatment time is not critical and heat treatment is performed for preferably 60 to 240 minutes, more preferably 60 to 180 minutes, even more preferably 60 to 120 minutes. If the heat treatment temperature is lower than 70°C, the reaction of silicon-bonded hydrogen atoms in component (B) with reactive groups or reactive substances in component (C) which can aggravate storage stability, such as Al-OH groups or residual mineral acid is retarded. If the heat treatment temperature is high in excess of 200°C, components (A) and (B) or polymers themselves can be degraded. If the heat treatment time is too short, the reaction of silicon-bonded hydrogen atoms in component (B) with reactive groups or reactive substances in component (C) which can aggravate storage stability, such as Al-OH groups or residual mineral acid will not proceed to a full extent, and the storage stability-improving effect may be short.

The heat-treated mixture obtained by combining components (A), (B) and (C), optionally components (F) and (G) and heat treating them at a temperature of at least 70°C is preferably cooled to a temperature of 0 to 50°C, more preferably normal temperature (1 to 25°C), after which component (H) and optionally other additives are added to the cool (heat-treated) mixture and mixed until uniform. The conditions under which the heat-treated mixture and component (H) and optionally other additives are mixed include normal temperature (1 to 25°C) and about 5 to 30 minutes. In this way, the second pack is obtained.

The mixing machine used in preparing the first and second packs may be any of well-known mixers such as static mixers, planetary mixers, and puddle mixers.

In the inventive composition, each of the first and second packs has a thermal conductivity of 2.0 to 7.0 W/m·k, preferably 2.2 to 7.0 W/m·k as measured by the hot disk method according to ISO 22007-2. If the thermal conductivity is too low, the ability to dissipate the heat from a heat-generating electronic part may become insufficient. In order to achieve a thermal conductivity in the range, the amount of component (C) blended is adjusted to the above-specified range.

In the inventive composition, each of the first and second packs has a viscosity at 25°C of 30 to 800 Pa·s,preferably 30 to 700 Pa·s as measured by a spiral viscometer under conditions: rotor A, speed 10 rpm, and shear rate 6 sec⁻¹. If the viscosity is too low, the composition may be insufficient in shape retention. If the viscosity is too high, the composition may be difficult to work. In order to achieve a viscosity in the range, the amount of component (C) blended is adjusted to the above-specified range.

In the inventive composition, the first and second packs can be uniformly mixed on a static mixer because of a small difference in viscosity between them. With respect to the viscosity as measured at 25°C by a spiral viscometer under conditions: rotor A, speed 10 rpm, and shear rate 6 sec⁻¹, the difference in initial (as prepared) viscosity between the first and second packs is preferably ±0 to 80%, more preferably ±0 to 50% based on the viscosity of the first pack.

In the practice of the invention, the first and second packs are preferably mixed in a substantially equal weight ratio. Specifically, the first and second packs are mixed in a weight ratio of preferably from 1:0.5 to 1:2, more preferably from 1:0.75 to 1:1.25, even more preferably from 1:0.9 to 1:1.1, most preferably from 1:0.95 to 1:1.05.

In the practice of the invention, the machine for mixing the first and second packs is not limited to the static mixer, and may be any of well-known mixers such as planetary mixers and puddle mixers.

Also, the conditions for curing the inventive composition are not particularly limited and may be the same as the curing conditions well known for heat conductive, addition curable silicone compositions. For example, the composition cures at normal temperature or may be heated if necessary. In the case of heat curing, conditions include heating at 40 to 180°C for 1 to 60 minutes.

The cured product of the inventive composition should preferably have a hardness in the range of 5 to 95, more preferably 10 to 90 as measured by Shore 00 hardness tester prescribed in ASTM D 2240-05.

### EXAMPLES

Examples and Comparative Examples are shown below for further illustrating the invention although the invention is not limited thereto. In Examples, Vi stands for vinyl and Me stands for methyl.

### [Example 1-1]

A 5-L planetary mixer (by Inoue Mfg. Inc.) was charged with 100 parts by weight of molecular chain both end dimethylvinylsiloxy-capped dimethylpolysiloxane having a viscosity of 600 mPa·s, 1.26 parts by weight (to provide a ratio of SiH groups in the polysiloxane of formula (6) to SiVi groups in the molecular chain both end dimethylvinylsiloxy-capped dimethylpolysiloxane = 0.11) of trimethylsiloxy-capped methylhydrogen/dimethylpolysiloxane having the general formula (6), shown below, with a viscosity of 28 mPa·s at 25°C, 18 parts by weight of organopolysiloxane having the general formula (7), shown below, with a viscosity of 30 mPa·s at 25°C, 600 parts by weight of fused spherical aluminum oxide A having a Na⁺ ion content of 22 ppm as measured by heat extracting aluminum oxide powder with pure water at 60°C for 24 hours and analyzing the water layer by ion chromatography, and an average particle size of 40 µm, and 400 parts by weight of ground aluminum oxide B having a Na⁺ ion content of 3 ppm as measured by heat extracting aluminum oxide powder with pure water at 60°C for 24 hours and analyzing the water layer by ion chromatography, and an average particle size of 1.2 µm, which were heated, treated and mixed at 100°C for 1 hour.

Next, the heat-treated mixture was fully cooled to room temperature. Thereafter, the mixture was uniformly mixed with 9.4 parts by weight (to provide a ratio of SiH groups in the polysiloxane of formula (8) to SiVi groups in the molecular chain both end dimethylvinylsiloxy-capped dimethylpolysiloxane = 0.79 and a ratio of total SiH groups in the polysiloxanes of formulae (6) and (8) to SiVi groups in the molecular chain both end dimethylvinylsiloxy-capped dimethylpolysiloxane = 0.9) of dimethylhydrogensiloxy-capped dimethylpolysiloxane having the general formula (8), shown below, with a viscosity of 17 mPa·s at 25°C, 0.18 part by weight of chloroplatinic acid vinylsiloxane complex (Pt content 1 wt%), and 0.18 part by weight of ethynyl cyclohexanol, yielding a heat conductive addition curable silicone composition 1-1.

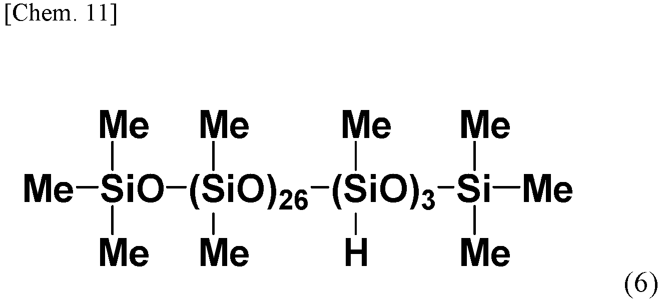

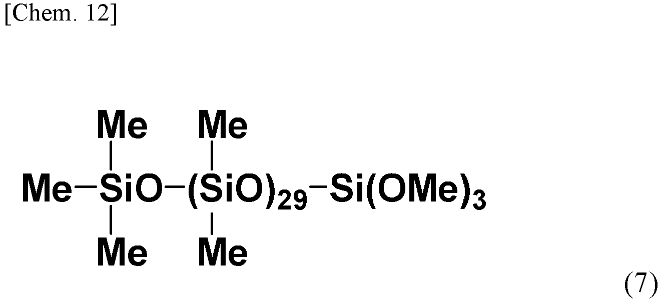

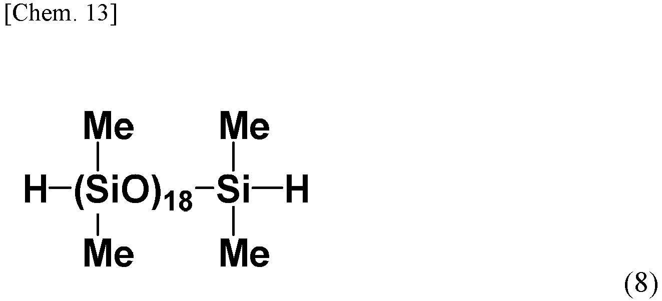

### [Comparative Example 1-1]

A 5-L planetary mixer (by Inoue Mfg. Inc.) was charged with 100 parts by weight of molecular chain both end dimethylvinylsiloxy-capped dimethylpolysiloxane having a viscosity of 600 mPa·s, 18 parts by weight of organopolysiloxane having the general formula (7), with a viscosity of 30 mPa·s at 25°C, 600 parts by weight of fused spherical aluminum oxide A having an average particle size of 40 µm, and 400 parts by weight of ground aluminum oxide B having an average particle size of 1.2 µm, which were heated, treated and mixed at 150°C for 1 hour.

Next, the heat-treated mixture was fully cooled to room temperature. Thereafter, the mixture was uniformly mixed with 1.26 parts by weight of trimethylsiloxy-capped methylhydrogen/dimethylpolysiloxane having the general formula (6), with a viscosity of 28 mPa·s at 25°C, 9.4 parts by weight (to provide a ratio of SiH groups in the polysiloxane of formula (6) to SiVi groups in the molecular chain both end dimethylvinylsiloxy-capped dimethylpolysiloxane = 0.11, a ratio of SiH groups in the polysiloxane of formula (8) to SiVi groups in the molecular chain both end dimethylvinylsiloxy-capped dimethylpolysiloxane = 0.79, and a ratio of total SiH groups in the polysiloxanes of formulae (6) and (8) to SiVi groups in the molecular chain both end dimethylvinylsiloxy-capped dimethylpolysiloxane = 0.9) of dimethylhydrogensiloxy-capped dimethylpolysiloxane having the general formula (8), with a viscosity of 17 mPa·s at 25°C, 0.18 part by weight of chloroplatinic acid vinylsiloxane complex (Pt content 1 wt%), and 0.18 part by weight of ethynyl cyclohexanol, yielding a heat conductive addition curable silicone composition 1-2.

### [Comparative Example 1-2]

A heat conductive addition curable silicone composition 1-3 was prepared as in Example 1-1 except that the heat treatment temperature was 50°C.

### [Comparative Example 1-3]

A heat conductive addition curable silicone composition 1-4 was prepared as in Example 1-1 except that the fused spherical aluminum oxide A was replaced by fused spherical aluminum oxide C having a Na⁺ ion content of 55 ppm as measured by heat extracting aluminum oxide powder with pure water at 60°C for 24 hours and analyzing the water layer by ion chromatography, and an average particle size of 42 µm.

### [Example 1-2]

A 5-L planetary mixer (by Inoue Mfg. Inc.) was charged with 100 parts by weight of molecular chain both end dimethylvinylsiloxy-capped dimethylpolysiloxane having a viscosity of 400 mPa·s, 2.33 parts by weight (to provide a ratio of SiH groups in the polysiloxane of formula (6) to SiVi groups in the molecular chain both end dimethylvinylsiloxy-capped dimethylpolysiloxane =0.15) of trimethylsiloxy-capped methylhydrogen/dimethylpolysiloxane having the general formula (6), with a viscosity of 28 mPa·s at 25°C, 234 parts by weight of organopolysiloxane having the general formula (7), with a viscosity of 30 mPa·s at 25°C, 4,836 parts by weight of fused spherical aluminum oxide D having a Na⁺ ion content of 11 ppm as measured by heat extracting aluminum oxide powder with pure water at 60°C for 24 hours and analyzing the water layer by ion chromatography, and an average particle size of 58 µm, and 1,814 parts by weight of ground aluminum oxide B having a Na⁺ ion content of 3 ppm as measured by heat extracting aluminum oxide powder with pure water at 60°C for 24 hours and analyzing the water layer by ion chromatography, and an average particle size of 1.2 µm, which were heated, treated and mixed at 100°C for 1 hour.

Next, the heat-treated mixture was fully cooled to room temperature. Thereafter, the mixture was uniformly mixed with 13.0 parts by weight (to provide a ratio of SiH groups in the polysiloxane of formula (8) to SiVi groups in the molecular chain both end dimethylvinylsiloxy-capped dimethylpolysiloxane = 0.85 and a ratio of total SiH groups in the polysiloxanes of formulae (6) and (8) to SiVi groups in the molecular chain both end dimethylvinylsiloxy-capped dimethylpolysiloxane = 1.0) of dimethylhydrogensiloxy-capped dimethylpolysiloxane having the general formula (8), with a viscosity of 17 mPa·s at 25°C, 1.00 part by weight of chloroplatinic acid vinylsiloxane complex (Pt content 1 wt%), and 1.00 part by weight of ethynyl cyclohexanol, yielding a heat conductive addition curable silicone composition 1-5.

### [Comparative Example 1-4]

A 5-L planetary mixer (by Inoue Mfg. Inc.) was charged with 100 parts by weight of molecular chain both end dimethylvinylsiloxy-capped dimethylpolysiloxane having a viscosity of 400 mPa·s, 234 parts by weight of organopolysiloxane having the general formula (7), with a viscosity of 30 mPa·s at 25°C, 4,836 parts by weight of fused spherical aluminum oxide D having a Na⁺ ion content of 11 ppm as measured by heat extracting aluminum oxide powder with pure water at 60°C for 24 hours and analyzing the water layer by ion chromatography, and an average particle size of 58 µm, and 1,814 parts by weight of ground aluminum oxide B having a Na⁺ ion content of 3 ppm as measured by heat extracting aluminum oxide powder with pure water at 60°C for 24 hours and analyzing the water layer by ion chromatography, and an average particle size of 1.2 µm, which were heated, treated and mixed at 150°C for 1 hour.

Next, the heat-treated mixture was fully cooled to room temperature. Thereafter, the mixture was uniformly mixed with 2.33 parts by weight of trimethylsiloxy-capped methylhydrogen/dimethylpolysiloxane with a viscosity of 28 mPa·s at 25°C, 13.0 parts by weight (to provide a ratio of SiH groups in the polysiloxane of formula (6) to SiVi groups in the molecular chain both end dimethylvinylsiloxy-capped dimethylpolysiloxane = 0.15, a ratio of SiH groups in the polysiloxane of formula (8) to SiVi groups in the molecular chain both end dimethylvinylsiloxy-capped dimethylpolysiloxane = 0.85, and a ratio of total SiH groups in the polysiloxanes of formulae (6) and (8) to SiVi groups in the molecular chain both end dimethylvinylsiloxy-capped dimethylpolysiloxane = 1.0) of dimethylhydrogensiloxy-capped dimethylpolysiloxane having the general formula (8), with a viscosity of 17 mPa·s at 25°C, 1.00 part by weight of chloroplatinic acid vinylsiloxane complex (Pt content 1 wt%), and 1.00 part by weight of ethynyl cyclohexanol, yielding a heat conductive addition curable silicone composition 1-6.

### [Comparative Example 1-5]

A heat conductive addition curable silicone composition 1-7 was prepared as in Example 1-2 except that the heat treatment temperature was 50°C.

Each of the heat conductive addition curable silicone compositions 1-1 to 1-7 in Examples 1-1, 1-2 and Comparative Examples 1-1 to 1-5 was measured for viscosity in an environment at 25°C by a spiral viscometer (Malcom viscometer Model PC-10AA, speed 10 rpm). Each silicone composition prior to curing was measured for thermal conductivity at 25°C by a hot disk thermal property measuring instrument TPS 2500S (by Kyoto Electronics Mfg. Co., Ltd.) (by the hot disk method according to ISO 22007-2).

Thereafter, the composition was thoroughly deaerated in vacuum, cast into a mold so as to provide a cured thickness of 6 mm, and heat cured at 120°C for 60 minutes into a cured product, which was measured for hardness by Shore 00 hardness tester prescribed in ASTM D2240-05. Also, the composition was allowed to stand in a refrigerator at 5°C for 6 months, after which it was measured for viscosity, thermal conductivity, and hardness as above. Tables 1 and 2 show the results in comparison with the initial data.

**[Table 1]**

| Physical properties tested | Example 1-1 | Comp. Example 1-1 | Comp. Example 1-2 | Comp. Example 1-3 |
|---|---|---|---|---|
| Viscosity (Pa·s) : initial | 111 | 108 | 116 | 107 |
| Thermal conductivity (W/m·k) : initial | 2.3 | 2.3 | 2.3 | 2.3 |
| Hardness (Shore 00) : initial | 62 | 64 | 63 | 65 |
| Viscosity (Pa·s) : after 5°C / 6 month storage | 114 | 111 | 120 | 113 |
| Thermal conductivity (W/m·k) : after 5°C / 6 month storage | 2.3 | 2.3 | 2.3 | 2.3 |
| Hardness (Shore 00) : after 5°C / 6 month storage | 61 | 39 | 46 | 49 |

**[Table 2]**

| Physical properties tested | Example 1-2 | Comparative Example 1-4 | Comparative Example 1-5 |
|---|---|---|---|
| Viscosity (Pa·s) : initial | 301 | 295 | 309 |
| Thermal conductivity (W/m·k) : initial | 6.6 | 6.6 | 6.6 |
| Hardness (Shore 00) : initial | 63 | 64 | 62 |
| Viscosity (Pa·s) : after 5°C / 6 month storage | 309 | 307 | 314 |
| Thermal conductivity (W/m·k) : after 5°C / 6 month storage | 6.6 | 6.6 | 6.6 |
| Hardness (Shore 00) : after 5°C / 6 month storage | 63 | 31 | 40 |

It is evident from the above results that after long-term storage, depending on whether or not the composition contains component (B), i.e., treating agent for the surface treatment of the heat conductive filler, no significant changes of viscosity and thermal conductivity were observed, but the hardness marked a large change of at least 10 points from the initial with the lapse of time. It is also seen that the Na⁺ ion content of component (C) is preferably up to 50 ppm. It is further evident that the temperature of heat treatment after mixing of components (A), (B) and (C) is preferably 70°C or higher. According to the invention, there are obtained a heat conductive addition curable silicone composition having long-term storage stability and a cured product thereof.

### [Example 2-1]

A 5-L planetary mixer (by Inoue Mfg. Inc.) was charged with 55.2 parts by weight of molecular chain both end dimethylvinylsiloxy-capped dimethylpolysiloxane having a viscosity of 600 mPa·s, 9 parts by weight of organopolysiloxane having the general formula (7), shown below, with a viscosity of 30 mPa·s at 25°C, 300 parts by weight of fused spherical aluminum oxide A having a Na⁺ ion content of 22 ppm as measured by heat extracting aluminum oxide powder with pure water at 60°C for 24 hours and analyzing the water layer by ion chromatography, and an average particle size of 40 µm, and 200 parts by weight of ground aluminum oxide B having a Na⁺ ion content of 3 ppm as measured by heat extracting aluminum oxide powder with pure water at 60°C for 24 hours and analyzing the water layer by ion chromatography, and an average particle size of 1.2 µm, which were heated, treated and mixed at 100°C for 1 hour.

Next, the heat-treated mixture was fully cooled to room temperature (25°C). Thereafter, the mixture was mixed with 0.18 part by weight of chloroplatinic acid vinylsiloxane complex (Pt content 1 wt%) at room temperature (25°C) for 20 minutes until uniform, yielding a heat conductive addition curable silicone composition (first pack) 2-1.

A 5-L planetary mixer (by Inoue Mfg. Inc.) was charged with 44.8 parts by weight of molecular chain both end dimethylvinylsiloxy-capped dimethylpolysiloxane having a viscosity of 600 mPa·s, 1.26 parts by weight (to provide a ratio of SiH groups in the polysiloxane of formula (6) to total SiVi groups in the molecular chain both end dimethylvinylsiloxy-capped dimethylpolysiloxane = 0.11) of trimethylsiloxy-capped methylhydrogen/dimethylpolysiloxane having the general formula (6), shown below, with a viscosity of 28 mPa·s at 25°C, 9 parts by weight of organopolysiloxane having the general formula (7), shown below, with a viscosity of 30 mPa·s at 25°C, 300 parts by weight of fused spherical aluminum oxide A having a Na⁺ ion content of 22 ppm as measured by heat extracting aluminum oxide powder with pure water at 60°C for 24 hours and analyzing the water layer by ion chromatography, and an average particle size of 40 µm, and 200 parts by weight of ground aluminum oxide B having a Na⁺ ion content of 3 ppm as measured by heat extracting aluminum oxide powder with pure water at 60°C for 24 hours and analyzing the water layer by ion chromatography, and an average particle size of 1.2 µm, which were heated, treated and mixed at 100°C for 1 hour.

Next, the heat-treated mixture was fully cooled to room temperature (25°C). Thereafter, the mixture was uniformly mixed at room temperature (25°C) with 0.02 part by weight of ethynyl cyclohexanol, and 9.4 parts by weight (to provide a ratio of SiH groups in the polysiloxane of formula (8) to total SiVi groups in the molecular chain both end dimethylvinylsiloxy-capped dimethylpolysiloxane = 0.79 and a ratio of total SiH groups in the polysiloxanes of formulae (6) and (8) to SiVi groups in the molecular chain both end dimethylvinylsiloxy-capped dimethylpolysiloxane = 0.9) of dimethylhydrogensiloxy-capped dimethylpolysiloxane having the general formula (8), shown below, with a viscosity of 17 mPa·s at 25°C, yielding a heat conductive addition curable silicone composition (second pack) 2-1.

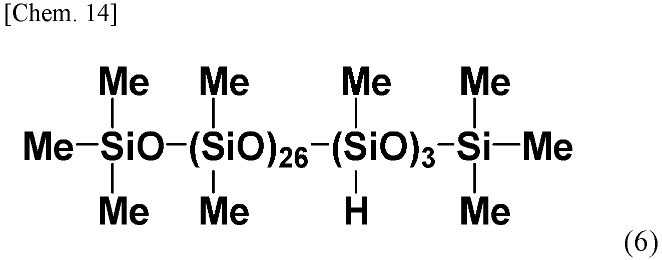

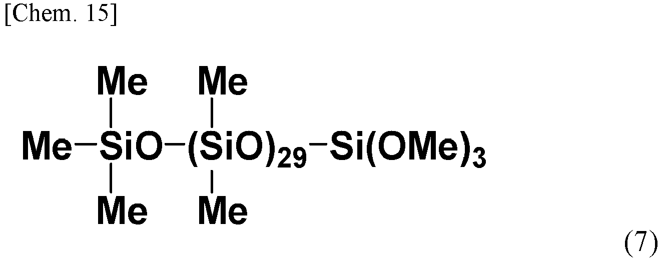

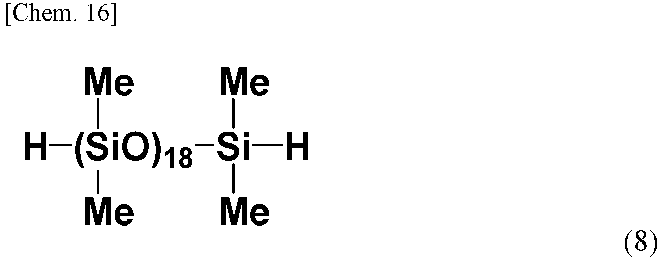

### [Comparative Example 2-1]

A 5-L planetary mixer (by Inoue Mfg. Inc.) was charged with 55.2 parts by weight of molecular chain both end dimethylvinylsiloxy-capped dimethylpolysiloxane having a viscosity of 600 mPa·s, 9 parts by weight of organopolysiloxane having the general formula (7), with a viscosity of 30 mPa·s at 25°C, 300 parts by weight of fused spherical aluminum oxide A having a Na⁺ ion content of 22 ppm as measured by heat extracting aluminum oxide powder with pure water at 60°C for 24 hours and analyzing the water layer by ion chromatography, and an average particle size of 40 µm, and 200 parts by weight of ground aluminum oxide B having a Na⁺ ion content of 3 ppm as measured by heat extracting aluminum oxide powder with pure water at 60°C for 24 hours and analyzing the water layer by ion chromatography, and an average particle size of 1.2 µm, which were heated, treated and mixed at 100°C for 1 hour.

Next, the heat-treated mixture was fully cooled to room temperature (25°C). Thereafter, the mixture was mixed with 0.18 part by weight of chloroplatinic acid vinylsiloxane complex (Pt content 1 wt%) at room temperature (25°C) for 20 minutes until uniform, yielding a heat conductive addition curable silicone composition (first pack) 2-2.

A 5-L planetary mixer (by Inoue Mfg. Inc.) was charged with 44.8 parts by weight of molecular chain both end dimethylvinylsiloxy-capped dimethylpolysiloxane having a viscosity of 600 mPa·s, 9 parts by weight of organopolysiloxane having the general formula (7), with a viscosity of 30 mPa·s at 25°C, 300 parts by weight of fused spherical aluminum oxide A having a Na⁺ ion content of 22 ppm as measured by heat extracting aluminum oxide powder with pure water at 60°C for 24 hours and analyzing the water layer by ion chromatography, and an average particle size of 40 µm, and 200 parts by weight of ground aluminum oxide B having a Na⁺ ion content of 3 ppm as measured by heat extracting aluminum oxide powder with pure water at 60°C for 24 hours and analyzing the water layer by ion chromatography, and an average particle size of 1.2 µm, which were heated, treated and mixed at 100°C for 1 hour.

Next, the heat-treated mixture was fully cooled to room temperature (25°C). Thereafter, the mixture was uniformly mixed at room temperature (25°C) for 20 minutes with 0.02 part by weight of ethynyl cyclohexanol, 1.26 parts by weight (to provide a ratio of SiH groups in the polysiloxane of formula (6) to total SiVi groups in the molecular chain both end dimethylvinylsiloxy-capped dimethylpolysiloxane = 0.11) of trimethylsiloxy-capped methylhydrogen/dimethylpolysiloxane having the general formula (6), with a viscosity of 28 mPa·s at 25°C, and 9.4 parts by weight (to provide a ratio of SiH groups in the polysiloxane of formula (8) to total SiVi groups in the molecular chain both end dimethylvinylsiloxy-capped dimethylpolysiloxane = 0.79 and a ratio of total SiH groups in the polysiloxanes of formulae (6) and (8) to SiVi groups in the molecular chain both end dimethylvinylsiloxy-capped dimethylpolysiloxane = 0.9) of dimethylhydrogensiloxy-capped dimethylpolysiloxane having the general formula (8), with a viscosity of 17 mPa·s at 25°C, yielding a heat conductive addition curable silicone composition (second pack) 2-2.

### [Comparative Example 2-2]

A heat conductive addition curable silicone composition (first/second packs) 2-3 was prepared as in Example 2-1 except that the heat treatment temperature was 50°C.

### [Comparative Example 2-3]

A heat conductive addition curable silicone composition (first/second packs) 2-4 was prepared as in Example 2-1 except that the fused spherical aluminum oxide A was replaced by fused spherical aluminum oxide C having a Na⁺ ion content of 55 ppm as measured by heat extracting aluminum oxide powder with pure water at 60°C for 24 hours and analyzing the water layer by ion chromatography, and an average particle size of 42 µm.

### [Example 2-2]

A 5-L planetary mixer (by Inoue Mfg. Inc.) was charged with 57.2 parts by weight of molecular chain both end dimethylvinylsiloxy-capped dimethylpolysiloxane having a viscosity of 400 mPa·s, 117 parts by weight of organopolysiloxane having the general formula (7), with a viscosity of 30 mPa·s at 25°C, 2,418 parts by weight of fused spherical aluminum oxide D having a Na⁺ ion content of 22 ppm as measured by heat extracting aluminum oxide powder with pure water at 60°C for 24 hours and analyzing the water layer by ion chromatography, and an average particle size of 56 µm, and 907 parts by weight of ground aluminum oxide B having a Na⁺ ion content of 3 ppm as measured by heat extracting aluminum oxide powder with pure water at 60°C for 24 hours and analyzing the water layer by ion chromatography, and an average particle size of 1.2 µm, which were heated, treated and mixed at 100°C for 1 hour.

Next, the heat-treated mixture was fully cooled to room temperature (25°C). Thereafter, the mixture was mixed with 1.00 part by weight of chloroplatinic acid vinylsiloxane complex (Pt content 1 wt%) at room temperature (25°C) for 20 minutes until uniform, yielding a heat conductive addition curable silicone composition (first pack) 2-5.

A 5-L planetary mixer (by Inoue Mfg. Inc.) was charged with 42.8 parts by weight of molecular chain both end dimethylvinylsiloxy-capped dimethylpolysiloxane having a viscosity of 400 mPa·s, 2.33 parts by weight (to provide a ratio of SiH groups in the polysiloxane of formula (6) to total SiVi groups in the molecular chain both end dimethylvinylsiloxy-capped dimethylpolysiloxane = 0.15) of trimethylsiloxy-capped methylhydrogen/dimethylpolysiloxane having the general formula (6), with a viscosity of 28 mPa·s at 25°C, 117 parts by weight of organopolysiloxane having the general formula (7), with a viscosity of 30 mPa·s at 25°C, 2,418 parts by weight of fused spherical aluminum oxide D having a Na⁺ ion content of 22 ppm as measured by heat extracting aluminum oxide powder with pure water at 60°C for 24 hours and analyzing the water layer by ion chromatography, and an average particle size of 56 µm, and 907 parts by weight of ground aluminum oxide B having a Na⁺ ion content of 3 ppm as measured by heat extracting aluminum oxide powder with pure water at 60°C for 24 hours and analyzing the water layer by ion chromatography, and an average particle size of 1.2 µm, which were heated, treated and mixed at 100°C for 1 hour.

Next, the heat-treated mixture was fully cooled to room temperature (25°C). Thereafter, the mixture was uniformly mixed at room temperature (25°C) for 20 minutes with 0.11 part by weight of ethynyl cyclohexanol, and 13.0 parts by weight (to provide a ratio of SiH groups in the polysiloxane of formula (8) to total SiVi groups in the molecular chain both end dimethylvinylsiloxy-capped dimethylpolysiloxane = 0.85 and a ratio of total SiH groups in the polysiloxanes of formulae (6) and (8) to SiVi groups in the molecular chain both end dimethylvinylsiloxy-capped dimethylpolysiloxane = 1.0) of dimethylhydrogensiloxy-capped dimethylpolysiloxane having the general formula (8), with a viscosity of 17 mPa·s at 25°C, yielding a heat conductive addition curable silicone composition (second pack) 2-5.

### [Comparative Example 2-4]

A 5-L planetary mixer (by Inoue Mfg. Inc.) was charged with 57.2 parts by weight of molecular chain both end dimethylvinylsiloxy-capped dimethylpolysiloxane having a viscosity of 400 mPa·s, 117 parts by weight of organopolysiloxane having the general formula (7), with a viscosity of 30 mPa·s at 25°C, 2,418 parts by weight of fused spherical aluminum oxide D having a Na⁺ ion content of 22 ppm as measured by heat extracting aluminum oxide powder with pure water at 60°C for 24 hours and analyzing the water layer by ion chromatography, and an average particle size of 56 µm, and 907 parts by weight of ground aluminum oxide B having a Na⁺ ion content of 3 ppm as measured by heat extracting aluminum oxide powder with pure water at 60°C for 24 hours and analyzing the water layer by ion chromatography, and an average particle size of 1.2 µm, which were heated, treated and mixed at 100°C for 1 hour.

Next, the heat-treated mixture was fully cooled to room temperature (25°C). Thereafter, the mixture was mixed with 1.00 part by weight of chloroplatinic acid vinylsiloxane complex (Pt content 1 wt%) at room temperature (25°C) for 20 minutes until uniform, yielding a heat conductive addition curable silicone composition (first pack) 2-6.

A 5-L planetary mixer (by Inoue Mfg. Inc.) was charged with 42.8 parts by weight of molecular chain both end dimethylvinylsiloxy-capped dimethylpolysiloxane having a viscosity of 400 mPa·s, 117 parts by weight of organopolysiloxane having the general formula (7), with a viscosity of 30 mPa·s at 25°C, 2,418 parts by weight of fused spherical aluminum oxide D having a Na⁺ ion content of 22 ppm as measured by heat extracting aluminum oxide powder with pure water at 60°C for 24 hours and analyzing the water layer by ion chromatography, and an average particle size of 56 µm, and 907 parts by weight of ground aluminum oxide B having a Na⁺ ion content of 3 ppm as measured by heat extracting aluminum oxide powder with pure water at 60°C for 24 hours and analyzing the water layer by ion chromatography, and an average particle size of 1.2 µm, which were heated, treated and mixed at 100°C for 1 hour.

Next, the heat-treated mixture was fully cooled to room temperature (25°C). Thereafter, the mixture was uniformly mixed at room temperature (25°C) for 20 minutes with 0.11 part by weight of ethynyl cyclohexanol, 2.33 parts by weight (to provide a ratio of SiH groups in the polysiloxane of formula (6) to total SiVi groups in the molecular chain both end dimethylvinylsiloxy-capped dimethylpolysiloxane = 0.15) of trimethylsiloxy-capped methylhydrogen/dimethylpolysiloxane having the general formula (6), with a viscosity of 28 mPa·s at 25°C, and 13.0 parts by weight (to provide a ratio of SiH groups in the polysiloxane of formula (8) to total SiVi groups in the molecular chain both end dimethylvinylsiloxy-capped dimethylpolysiloxane = 0.85 and a ratio of total SiH groups in the polysiloxanes of formulae (6) and (8) to SiVi groups in the molecular chain both end dimethylvinylsiloxy-capped dimethylpolysiloxane = 1.0) of dimethylhydrogensiloxy-capped dimethylpolysiloxane having the general formula (8), with a viscosity of 17 mPa·s at 25°C, yielding a heat conductive addition curable silicone composition (second pack) 2-6.

### [Comparative Example 2-5]

A heat conductive addition curable silicone composition (first/second packs) 2-7 was prepared as in Example 2-2 except that the heat treatment temperature was 50°C.

Each of the heat conductive addition curable silicone compositions (first/second packs) 2-1 to 2-7 in Examples 2-1, 2-2 and Comparative Examples 2-1 to 2-5 was measured for viscosity in an environment at 25°C by a spiral viscometer (Malcom viscometer Model PC-10AA, speed 10 rpm). Each silicone composition prior to curing was measured for thermal conductivity at 25°C by a hot disk thermal property measuring instrument TPS 2500S (by Kyoto Electronics Mfg. Co., Ltd.) (by the hot disk method according to ISO 22007-2).

Thereafter, using a static mixer (MXA 6.3-21 (by Noritake Co., Ltd.), the first and second packs of each composition were dispensed and mixed in a weight ratio of 1:1 at normal temperature (25°C) until uniform. The composition was thoroughly deaerated in vacuum, cast into a mold so as to provide a cured thickness of 6 mm, and cured at 25°C for 24 hours into a cured product, which was measured for hardness by Shore 00 hardness tester prescribed in ASTM D2240-05. Also, the first and second packs were allowed to stand in a thermostatic chamber at 25°C for 6 months, after which viscosity, thermal conductivity, and hardness were measured as above. Tables 3 and 4 show the results in comparison with the initial data.

**[Table 3]**

| Physical properties tested | Example 2-1 | Comp. Example 2-1 | Comp. Example 2-2 | Comp. Example 2-3 |
|---|---|---|---|---|
| Viscosity of 1st/2nd packs (Pa·s) : initial | 132/92 | 128/87 | 136/97 | 123/87 |
| Thermal conductivity of 1st/2nd packs (W/m·k) : initial | 2.3/2.3 | 2.3/2.3 | 2.3/2.3 | 2.3/2.3 |
| Hardness (Shore 00) : initial | 60 | 62 | 61 | 63 |
| Viscosity of 1st/2nd packs (Pa·s) : after 25°C / 6 month storage | 130/90 | 128/89 | 138/101 | 129/88 |
| Thermal conductivity of 1st/2nd packs (W/m·k) : after 25°C / 6 month storage | 2.3/2.3 | 2.3/2.3 | 2.3/2.3 | 2.3/2.3 |
| Hardness (Shore 00) : after 25°C / 6 month storage | 59 | 37 | 44 | 46 |

**[Table 4]**

| Physical properties tested | Example 2-2 | Comparative Example 2-4 | Comparative Example 2-5 |
|---|---|---|---|
| Viscosity of 1st/2nd packs (Pa·s) : initial | 306/300 | 300/297 | 314/308 |
| Thermal conductivity of 1st/2nd packs (W/m·k) : initial | 6.6/6.6 | 6.6/6.6 | 6.6/6.6 |
| Hardness (Shore 00) : initial | 60 | 61 | 59 |
| Viscosity of 1st/2nd packs (Pa·s) : after 25°C / 6 month storage | 304/308 | 311/298 | 312/315 |
| Thermal conductivity of 1st/2nd packs (W/m·k) : after 25°C / 6 month storage | 6.6/6.6 | 6.6/6.6 | 6.6/6.6 |
| Hardness (Shore 00) : after 25°C / 6 month storage | 60 | 28 | 37 |

It is evident from the above results that the compositions of Examples 2-1 and 2-2 kept their viscosity and thermal conductivity unchanged and the hardness of their cured products unchanged even after long-term storage (25°C/6 months). In the compositions of Comparative Examples 2-1 to 2-5, no significant changes of viscosity and thermal conductivity were observed after long-term storage, but the hardness of the cured product marked a large change of at least 10 points from the initial with the lapse of time. It is seen from Comparative Examples 2-1 and 2-4 that the second pack is preferably prepared by heating, treating and mixing component (B) with components (A) and (C). It is also seen from Comparative Example 2-3 that the Na⁺ ion content of component (C) is preferably up to 50 ppm. It is further evident from Comparative Examples 2-2 and 2-5 that in preparing the second pack, the temperature of heat treatment after mixing of components (A), (B) and (C) is preferably 70°C or higher. According to the invention, there are obtained a heat conductive addition curable silicone composition having long-term storage stability and a cured product thereof.

### INDUSTRIAL APPLICABILITY

A heat conductive silicone cured product obtained by curing the heat conductive, addition curable silicone composition of the invention maintains its hardness in a stable manner without being affected by the heat conductive filler even after long-term storage. An improvement in reliability is expectable in the heat dissipation/protection application for electronic parts including power devices, transistors, thyristors, and central processing units (CPU).

## Claims

1. A heat conductive, addition curable silicone composition comprising
a mixture obtained by mixing and heating an organopolysiloxane having at least two silicon-bonded alkenyl groups per molecule, an organohydrogenpolysiloxane having at least three silicon-bonded hydrogen atoms per molecule, and aluminum oxide particles having a Na⁺ ion content of up to 50 ppm as measured by heat extracting aluminum oxide powder with pure water at 60°C for 24 hours and analyzing the water layer by ion chromatography, so that the aluminum oxide particles are surface-treated with the organohydrogenpolysiloxane,
an organohydrogenpolysiloxane having two or more silicon-bonded hydrogen atoms per molecule, and
a platinum group metal catalyst.

2. The heat conductive, addition curable silicone composition of claim 1, comprising
a heat-treated mixture obtained by mixing and heating at a temperature of at least 70°C,
(A) 100 parts by weight of an organopolysiloxane having at least two silicon-bonded alkenyl groups per molecule, represented by the average compositional formula (1):
RₐR¹_{b}SiO_{(4-a-b)/2} (1)
wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4,
(B) an organohydrogenpolysiloxane having at least three silicon-bonded hydrogen atoms per molecule, represented by the average compositional formula (2):
R²_{c}H_{d}SiO_{(4-c-d)/2} (2)
wherein R² is independently an unsubstituted or substituted monovalent hydrocarbon group free of aliphatic unsaturation, c is a positive number of 0.7 to 2.2, d is a positive number of 0.001 to 0.5, and c+d is a positive number of 0.8 to 2.5, in such an amount as to provide 0.1 to 2 silicon-bonded hydrogen atoms (i.e., SiH groups) in component (B) per alkenyl group in component (A), and
(C) 1,000 to 7,000 parts by weight of aluminum oxide particles having a Na⁺ ion content of up to 50 ppm as measured by heat extracting aluminum oxide powder with pure water at 60°C for 24 hours and analyzing the water layer by ion chromatography,
(D) an organohydrogenpolysiloxane having at least two silicon-bonded hydrogen atoms per molecule, represented by the average compositional formula (3):
R³ₑH_{f}SiO_{(4-e-f)/2} (3)
wherein R³ is independently an unsubstituted or substituted monovalent hydrocarbon group free of aliphatic unsaturation, e is a positive number of 0.7 to 2.2, f is a positive number of 0.001 to 0.5, and e+f is a positive number of 0.8 to 2.5, in such an amount as to provide 0.01 to 3 silicon-bonded hydrogen atoms (i.e., SiH groups) in component (D) per alkenyl group in component (A), and
(E) a platinum group metal catalyst in such an amount as to provide 1 to 200 ppm by weight of platinum group metal based on component (A), wherein
the composition has a thermal conductivity of 2.0 to 7.0 W/m·k as measured by the hot disk method according to ISO 22007-2, and a viscosity at 25°C of 30 to 800 Pa·s as measured by a spiral viscometer under conditions: rotor A, speed 10 rpm, and shear rate 6 sec⁻¹.

3. The heat conductive, addition curable silicone composition of claim 2 wherein the total number of SiH groups in components (B) and (D) is 0.11 to 5 per alkenyl group in component (A).

4. The heat conductive, addition curable silicone composition of claim 2 or 3 wherein the heat-treated mixture is obtained by mixing and heating at a temperature of at least 70°C components (A) to (C) with (F) a silane coupling agent and/or (G) an organopolysiloxane represented by the general formula (5): 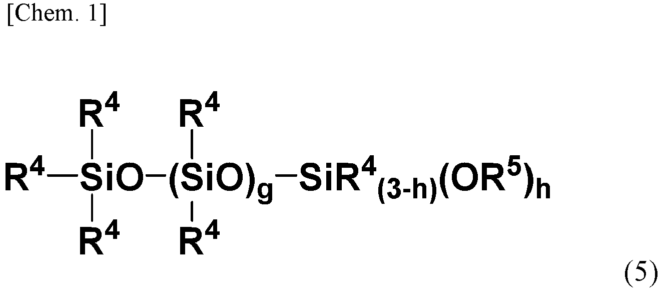 wherein R⁴ is independently an unsubstituted or substituted monovalent hydrocarbon group, R⁵ is independently an alkyl, alkoxyalkyl, alkenyl or acyl group, g is an integer of 5 to 100, and h is an integer of 1 to 3, and having a viscosity at 25°C of 0.01 to 30 Pa·s.

5. A method of preparing a heat conductive, addition curable silicone composition, comprising the steps of:
heat treating at a temperature of at least 70°C,
(A) 100 parts by weight of an organopolysiloxane having at least two silicon-bonded alkenyl groups per molecule, represented by the average compositional formula (1):
RₐR¹_{b}SiO_{(4-a-b)/2} (1)
wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4,
(B) an organohydrogenpolysiloxane having at least three silicon-bonded hydrogen atoms per molecule, represented by the average compositional formula (2):
R²_{c}H_{d}SiO_{(4-c-d)/2} (2)
wherein R² is independently an unsubstituted or substituted monovalent hydrocarbon group free of aliphatic unsaturation, c is a positive number of 0.7 to 2.2, d is a positive number of 0.001 to 0.5, and c+d is a positive number of 0.8 to 2.5, in such an amount as to provide 0.1 to 2 silicon-bonded hydrogen atoms (i.e., SiH groups) in component (B) per alkenyl group in component (A), and
(C) 1,000 to 7,000 parts by weight of aluminum oxide particles having a Na⁺ ion content of up to 50 ppm as measured by heat extracting aluminum oxide powder with pure water at 60°C for 24 hours and analyzing the water layer by ion chromatography,
cooling the heat-treated mixture,
adding to and mixing with the mixture
(D) an organohydrogenpolysiloxane having at least two silicon-bonded hydrogen atoms per molecule, represented by the average compositional formula (3):
R³ₑH_{f}SiO_{(4-e-f)/2} (3)
wherein R³ is independently an unsubstituted or substituted monovalent hydrocarbon group free of aliphatic unsaturation, e is a positive number of 0.7 to 2.2, f is a positive number of 0.001 to 0.5, and e+f is a positive number of 0.8 to 2.5, in such an amount as to provide 0.01 to 3 silicon-bonded hydrogen atoms (i.e., SiH groups) in component (D) per alkenyl group in component (A), and
(E) a platinum group metal catalyst in such an amount as to provide 1 to 200 ppm by weight of platinum group metal based on component (A), wherein
the resulting composition has a thermal conductivity of 2.0 to 7.0 W/m·k as measured by the hot disk method according to ISO 22007-2, and a viscosity at 25°C of 30 to 800 Pa·s as measured by a spiral viscometer under conditions: rotor A, speed 10 rpm, and shear rate 6 sec⁻¹.

6. The method of claim 5 wherein the total number of SiH groups in components (B) and (D) is 0.11 to 5 per alkenyl group in component (A).

7. The method of claim 5 or 6, wherein the heat treatment is performed by further mixing components (A) to (C) with (F) a silane coupling agent and/or (G) an organopolysiloxane represented by the general formula (5): 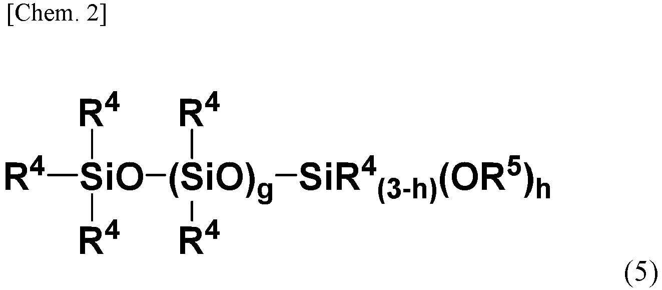 wherein R⁴ is independently an unsubstituted or substituted monovalent hydrocarbon group, R⁵ is independently an alkyl, alkoxyalkyl, alkenyl or acyl group, g is an integer of 5 to 100, and h is an integer of 1 to 3, and having a viscosity at 25°C of 0.01 to 30 Pa·s.

8. The heat conductive, addition curable silicone composition of claim 1, which is of two pack type, i.e., consists of
a first pack containing
a heat-treated mixture obtained by heat treating at a temperature of at least 70°C (A) an organopolysiloxane having at least two silicon-bonded alkenyl groups per molecule, represented by the average compositional formula (1):
RₐR¹_{b}SiO_{(4-a-b)/2} (1)
wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4, and (C) aluminum oxide having a Na⁺ ion content of up to 50 ppm as measured by heat extracting aluminum oxide powder with pure water at 60°C for 24 hours and analyzing the water layer by ion chromatography, and
(E) a platinum group metal catalyst in such an amount as to provide 1 to 200 ppm of platinum group metal based on the total weight of component (A), and
a second pack containing
a heat-treated mixture obtained by heat treating at a temperature of at least 70°C (A) an organopolysiloxane having at least two silicon-bonded alkenyl groups per molecule, represented by the average compositional formula (1):
RₐR¹_{b}SiO_{(4-a-b)/2} (1)
wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4, (B) an organohydrogenpolysiloxane having at least three silicon-bonded hydrogen atoms per molecule, represented by the average compositional formula (2):
R²_{c}H_{d}SiO_{(4-c-d)/2} (2)
wherein R² is independently an unsubstituted or substituted monovalent hydrocarbon group free of aliphatic unsaturation, c is a positive number of 0.7 to 2.2, d is a positive number of 0.001 to 0.5, and c+d is a positive number of 0.8 to 2.5, in such an amount as to provide 0.1 to 2 silicon-bonded hydrogen atoms (i.e., SiH groups) in component (B) per alkenyl group in the total of component (A), and (C) aluminum oxide having a Na⁺ ion content of up to 50 ppm as measured by heat extracting aluminum oxide powder with pure water at 60°C for 24 hours and analyzing the water layer by ion chromatography, and
(H) an organohydrogenpolysiloxane having two silicon-bonded hydrogen atoms per molecule, represented by the average compositional formula (4):
R⁷ⱼHₖSiO_{(4-j-k)/2} (4)
wherein R⁷ is independently an unsubstituted or substituted monovalent hydrocarbon group free of aliphatic unsaturation, j is a positive number of 0.7 to 2.2, k is a positive number of 0.001 to 0.5, and j+k is a positive number of 0.8 to 2.5, in such an amount as to provide 0.01 to 3 silicon-bonded hydrogen atoms (i.e., SiH groups) in component (H) per alkenyl group in the total of component (A),
wherein the first pack is free of components (B) and (H), the second pack is free of component (E), the total amount of component (A) in the composition is 100 parts by weight, the total amount of component (C) is 1,000 to 7,000 parts by weight, each of the first and second packs has a thermal conductivity of 2.0 to 7.0 W/m·k as measured by the hot disk method according to ISO 22007-2, and a viscosity at 25°C of 30 to 800 Pa·s as measured by a spiral viscometer under conditions: rotor A, speed 10 rpm, and shear rate 6 sec⁻¹.

9. The heat conductive, addition curable silicone composition of claim 8 wherein the total number of SiH groups in components (B) and (H) is 0.11 to 5 per alkenyl group in the total of component (A).

10. The heat conductive, addition curable silicone composition of claim 8 or 9, further comprising (F) a silane coupling agent and/or (G) an organopolysiloxane represented by the general formula (5): 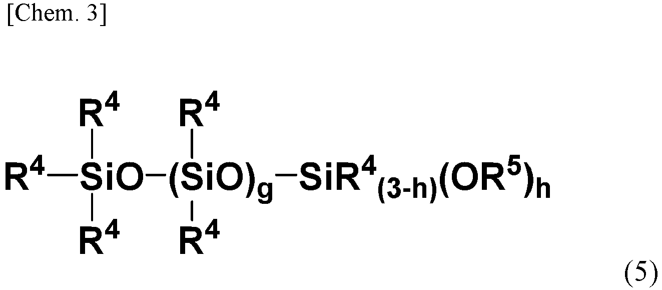
wherein R⁴ is independently an unsubstituted or substituted monovalent hydrocarbon group, R⁵ is independently an alkyl, alkoxyalkyl, alkenyl or acyl group, g is an integer of 5 to 100, and h is an integer of 1 to 3, and having a viscosity at 25°C of 0.01 to 30 Pa·s,
wherein the first pack contains component (F) and/or (G) as a heat-treated mixture of components (A) and (C) therewith after heat treatment at 70°C or higher, and the second pack contains component (F) and/or (G) as a heat-treated mixture of components (A), (B) and (C) therewith after heat treatment at 70°C or higher.

11. A method of preparing a heat conductive, addition curable silicone composition, comprising the steps of:
preparing a first pack by mixing (A) an organopolysiloxane having at least two silicon-bonded alkenyl groups per molecule, represented by the average compositional formula (1):
RₐR¹_{b}SiO_{(4-a-b)/2} (1)
wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4, with (C) aluminum oxide having a Na⁺ ion content of up to 50 ppm as measured by heat extracting aluminum oxide powder with pure water at 60°C for 24 hours and analyzing the water layer by ion chromatography, at a temperature of at least 70°C for heat treatment, cooling the heat-treated mixture, adding to and mixing with the heat-treated mixture (E) a platinum group metal catalyst in such an amount as to provide 1 to 200 ppm of platinum group metal based on the total weight of component (A), and
preparing a second pack by mixing (A) an organopolysiloxane having at least two silicon-bonded alkenyl groups per molecule, represented by the average compositional formula (1):
RₐR¹_{b}SiO_{(4-a-b)/2} (1)
wherein R is independently an alkenyl group, R¹ is independently an unsubstituted or substituted monovalent hydrocarbon group free of aliphatic unsaturation, a is a positive number of 0.0001 to 0.2, b is a positive number of 1.7 to 2.2, and a+b is a positive number of 1.9 to 2.4, (B) an organohydrogenpolysiloxane having at least three silicon-bonded hydrogen atoms per molecule, represented by the average compositional formula (2):
R²_{c}H_{d}SiO_{(4-c-d)/2} (2)
wherein R² is independently an unsubstituted or substituted monovalent hydrocarbon group free of aliphatic unsaturation, c is a positive number of 0.7 to 2.2, d is a positive number of 0.001 to 0.5, and c+d is a positive number of 0.8 to 2.5, in such an amount as to provide 0.1 to 2 silicon-bonded hydrogen atoms (i.e., SiH groups) in component (B) per alkenyl group in component (A), and (C) aluminum oxide having a Na⁺ ion content of up to 50 ppm as measured by heat extracting aluminum oxide powder with pure water at 60°C for 24 hours and analyzing the water layer by ion chromatography, at a temperature of at least 70°C for heat treatment, cooling the heat-treated mixture, adding to and mixing with the heat-treated mixture (H) an organohydrogenpolysiloxane having two silicon-bonded hydrogen atoms per molecule, represented by the average compositional formula (4):
R⁷ⱼHₖSiO_{(4-j-k)/2} (4)
wherein R⁷ is independently an unsubstituted or substituted monovalent hydrocarbon group free of aliphatic unsaturation, j is a positive number of 0.7 to 2.2, k is a positive number of 0.001 to 0.5, and j+k is a positive number of 0.8 to 2.5, in such an amount as to provide 0.01 to 3 silicon-bonded hydrogen atoms (i.e., SiH groups) in component (H) per alkenyl group in the total of component (A),
wherein the first pack is free of components (B) and (H), the second pack is free of component (E), the total amount of component (A) in the composition is 100 parts by weight, the total amount of component (C) is 1,000 to 7,000 parts by weight, each of the first and second packs has a thermal conductivity of 2.0 to 7.0 W/m·k as measured by the hot disk method according to ISO 22007-2, and a viscosity at 25°C of 30 to 800 Pa·s as measured by a spiral viscometer under conditions: rotor A, speed 10 rpm, and shear rate 6 sec⁻¹.

12. The method of claim 11 wherein the total number of SiH groups in components (B) and (H) is 0.11 to 5 per alkenyl group in the total of component (A).

13. The method of claim 11 or 12, wherein component (F) is a silane coupling agent and component (G) is an organopolysiloxane represented by the general formula (5): 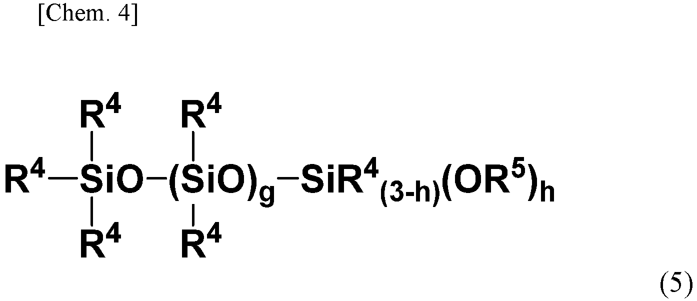 wherein R⁴ is independently an unsubstituted or substituted monovalent hydrocarbon group, R⁵ is independently an alkyl, alkoxyalkyl, alkenyl or acyl group, g is an integer of 5 to 100, and h is an integer of 1 to 3, and having a viscosity at 25°C of 0.01 to 30 Pa·s,
the step of preparing the first pack includes mixing components (A) and (C) with component (F) and/or (G) and heat treating the mixture, and the step of preparing the second pack includes mixing components (A), (B) and (C) with component (F) and/or (G) and heat treating the mixture.
